# EUROPEAN PATENT APPLICATION

(11) **EP 2 104 344 A1**
(43) Date of publication of application: **23.09.2009**
(21) Application number: 07860364.4
(22) Date of filing: 27.12.2007
(51) Int. Cl.: H04N 5/46, H04B 1/16, H04N 7/173

(54) **DIGITAL BROADCAST RECEPTION CIRCUIT, DIGITAL BROADCASTS RECEPTION DEVICE USING THE SAME, AND ITS CONTROL METHOD**

(30) Priority: 10.01.2007 JP 2007002645; 25.06.2007 JP 2007166748
(71) Applicant: Panasonic Corporation, Kadoma-shi Osaka 571-8501 (JP)
(72) Inventor: YAMAMOTO, Naohiro, Osaka-shi, Osaka 540-6207 (JP); TAKAYAMA, Shuichi, Osaka-shi, Osaka 540-6207 (JP); MIYASHITA, Takanori, Osaka-shi, Osaka 540-6207 (JP); TANAKA, Sayuri, Osaka-shi, Osaka 540-6207 (JP); IWAKIRI, Yuji, Osaka-shi, Osaka 540-6207 (JP); TATSUMOTO, Hiroki, Osaka-shi, Osaka 540-6207 (JP); KAKIUCHI, Hidetoshi, Osaka-shi, Osaka 540-6207 (JP)
(74) Representative: Unland, Jochen Hermann
(86) International application number: PCT/JP2007/075142
(87) International publication number: WO 2008/084715

(57) **Abstract**

A digital broadcast reception circuit that can perform switching of video and audio without interruption and can realize a reduction in power consumption, a digital broadcast reception device including the digital broadcast reception circuit, and a method of controlling the digital broadcast reception device are provided. The digital broadcast reception circuit is used in a digital broadcast reception device that receives digital broadcast signals transmitted as signals in plural hierarchical levels of different qualities derived from one content, and outputs, among a plurality of output signals generated by processing the signals in plural hierarchical levels in signal processing units, respectively an output signal based on a signal in a selected hierarchical level. The digital broadcast reception circuit includes: a switching control unit that judges a reception status of each of the signals in plural hierarchical levels in order to select one of the hierarchical levels with respect to which the output signal is to be generated, generates a switching signal for outputting a signal in the selected one of the hierarchical levels, and partly or entirely deactivates part of the signal processing units that processes a signal in an unselected one of the hierarchical levels; and an output switching unit that switches an output signal based on the switching signal.

## Description

### Technical Field

The present invention relates to a digital broadcast reception circuit that receives a digital broadcast transmitted in plural hierarchical levels and automatically switches a hierarchical level to be used for viewing depending on a reception status of the digital broadcast, a digital broadcast reception device including the digital broadcast reception circuit, and a method for controlling the digital broadcast reception device.

### Background Art

Conventionally, there has been proposed a digital broadcast reception device that, when one content is broadcast in plural hierarchical levels simultaneously in digital broadcasting by hierarchical transmission, automatically determines a hierarchical level to be used for viewing and switches video and audio in a seamless manner, depending on a reception status such as a reception strength of a digital broadcast signal, a decompression status of digital data, etc.

For example, in the digital broadcast reception device described in Patent Document 1, in order to switch video and audio of one content broadcast in plural hierarchical levels in a seamless manner, video data and audio data in the respective hierarchical levels are processed simultaneously at all times, and at the instant when a switching condition is met, switching to an appropriate hierarchical level is performed so that video and audio in that hierarchical level that have been processed are outputted.
Patent Document 1: JP 2005-277873A

### Disclosure of Invention

### Problem to be Solved by the Invention

However, when video data and audio data in plural hierarchical levels are processed simultaneously in a continuous manner as in the above-described digital broadcast reception device according to the conventional technique, the system is subjected to a heavy load, and the power consumption is increased. In recent years, it has been requested that home electric appliances achieve lower power consumption, and particularly in the case where the digital broadcast reception device is mounted in a mobile unit, the amount of power that can be consumed is limited. It is therefore important to minimize the power consumption by deactivating a functional block not to be used. Despite this, the digital broadcast reception device and digital broadcast receiving method according to the conventional technique do not take into account a method for activating and deactivating a functional block at the time of switching a hierarchical level.

The present invention is to solve these conventional problems, and has as its object to provide a digital broadcast reception circuit that can perform switching of video and audio without interruption and achieve a reduction in power consumption, a digital broadcast reception device including the digital broadcast reception circuit, and a method for controlling the digital broadcast reception device.

### Means for Solving the Problem

In order to solve the above-described problems, a digital broadcast reception circuit according to the present invention is used in a digital broadcast reception device that receives digital broadcast signals transmitted as signals in plural hierarchical levels of different qualities derived from one content, and outputs, among a plurality of output signals generated by processing the signals in plural hierarchical levels in signal processing units, respectively, an output signal based on a signal in a selected hierarchical level. The digital broadcast reception circuit includes: a switching control unit that judges a reception status of each of the signals in plural hierarchical levels in order to select one of the hierarchical levels with respect to which the output signal is to be generated, generates a switching signal for outputting a signal in the selected one of the hierarchical levels, and partly or entirely deactivates part of the signal processing units that processes a signal in an unselected one of the hierarchical levels; and an output switching unit that switches an output signal based on the switching signal.

Furthermore, a digital broadcast reception device according to the present invention includes: the digital broadcast reception circuit according to the present invention; and signal processing units that process a digital broadcast signal. The signal processing units include a tuner section, a demodulating section, a TS processing section, and a decoding section. The tuner section, the demodulating section, the TS processing section, and the decoding section can process signals in two or more different hierarchical levels simultaneously, can activate and deactivate independently a function that processes a signal in each of the hierarchical levels, and further can output independently an index representing a reception status regarding one of the hierarchical levels with respect to which processing is being performed.

Moreover, a method of controlling a digital broadcast reception device according to the present invention includes: a first step of judging a reception status of each of digital broadcast signals transmitted as signals in plural hierarchical levels of different qualities derived from one content, selecting, based on the reception status, one of the hierarchical levels with respect to which an output signal is to be generated, and starting, when an index representing the reception status reaches a first threshold value, signal processing based on a signal in the selected one of the hierarchical levels; and a second step of performing, when the index representing the reception status reaches a second threshold value, switching to a state for outputting an output signal obtained by processing based on a signal in the selected one of the hierarchical levels.

### Effects of the Invention

According to the above-described configurations, in the digital broadcast reception circuit and digital broadcast reception device according to the present invention, switching of video and audio can be performed without interruption, and a reduction in power consumption can be achieved.

### Brief Description of Drawings

FIG. 1 is a diagram showing a functional configuration of a digital broadcast reception device according to a first embodiment of the present invention.
FIG. 2 shows an exemplary configuration of a tuner section in the digital broadcast reception device according to the first embodiment of the present invention.
FIG. 3 is an exemplary configuration of a demodulating section in the digital broadcast reception device according to the first embodiment of the present invention.
FIG. 4 is an exemplary configuration of a TS processing section in the digital broadcast reception device according to the first embodiment of the present invention.
FIG. 5 is an exemplary configuration of a decoding section in the digital broadcast reception device according to the first embodiment of the present invention.
FIG. 6 is a flowchart showing a procedure of switching to signal processing based on a signal in a strong hierarchical level, which is performed in the digital broadcast reception device according to the first embodiment of the present invention.
FIG. 7 is a diagram showing timing at which switching to the signal processing based on a signal in a strong hierarchical level is performed in the digital broadcast reception device according to the first embodiment of the present invention.
FIG. 8 is a diagram showing a relationship between indices representing reception states at the time when switching to the signal processing based on a signal in a strong hierarchical level is performed in the digital broadcast reception device according to the first embodiment of the present invention.
FIG. 9 is a flowchart showing a procedure of switching to signal processing based on a signal in a weak hierarchical level, which is performed in the digital broadcast reception device according to the first embodiment of the present invention.
FIG. 10 is a diagram showing timing at which switching to the signal processing based on a signal in a weak hierarchical level is performed in the digital broadcast reception device according to the first embodiment of the present invention.
FIG. 11 is a diagram showing a relationship between indices representing reception states at the time when switching to the signal processing based on a signal in a weak hierarchical level is performed in the digital broadcast reception device according to the first embodiment of the present invention.
FIG. 12 is a diagram showing a functional configuration of a digital broadcast reception device according to a second embodiment of the present invention.
FIG. 13 shows an exemplary configuration of a decoding section in the digital broadcast reception device according to the second embodiment of the present invention.
FIG. 14 is a flowchart showing a procedure of switching to signal processing based on a signal in a strong hierarchical level, which is performed in the digital broadcast reception device according to the second embodiment of the present invention.
FIG. 15 is a diagram showing timing at which switching to the signal processing based on a signal in a strong hierarchical level is performed in the digital broadcast reception device according to the second embodiment of the present invention.
FIG. 16 is a diagram showing a relationship between indices representing reception states at the time when switching to the signal processing based on a signal in a strong hierarchical level is performed in the digital broadcast reception device according to the second embodiment of the present invention.
FIG. 17 is a flowchart showing a procedure of switching to signal processing based on a signal in a weak hierarchical level, which is performed in the digital broadcast reception device according to the second embodiment of the present invention.
FIG.18 is a diagram showing timing at which switching to the signal processing based on a signal in a weak hierarchical level is performed in the digital broadcast reception device according to the second embodiment of the present invention.
FIG. 19 is a diagram showing a relationship between indices representing reception states at the time when switching to the signal processing based on a signal in a weak hierarchical level is performed in the digital broadcast reception device according to the first embodiment of the present invention.
FIG. 20 is a diagram showing a functional configuration of a digital broadcast reception device according to a third embodiment of the present invention.
FIG. 21 is an exemplary configuration of a TS processing section in the digital broadcast reception device according to the third embodiment of the present invention.
FIG. 22 is an exemplary configuration of a decoding section in the digital broadcast reception device according to the third embodiment of the present invention.
FIG. 23 is a diagram showing a functional configuration of a digital broadcast reception device as an application example of the third embodiment of the present invention.

### Description of the Invention

Preferably, in the above-described digital broadcast reception circuit according to the present invention, the switching control unit obtains an index for judging the reception status of each of the signals in plural hierarchical levels, when the index meets a signal processing portion activation condition, the switching control unit activates part of the signal processing units that is used to generate the output signal based on a signal in the selected one of the hierarchical levels, and when the index meets an output switching condition, the switching control unit generates the switching signal.

This configuration allows a reception status to be grasped appropriately using an index, and can ensure that, when output switching is performed, a resultant output signal is based on a signal in a hierarchical level designated as a result of the switching.

Furthermore, preferably the switching control unit intermittently activates one of the signal processing units that processes a signal in one of the hierarchical levels with respect to which the index is to be obtained. According to this configuration, it is possible to obtain an index representing a reception status reliably, while suppressing power consumption.

Moreover, preferably, the plural hierarchical levels of different qualities are composed of a strong hierarchical level having high resistance to noise and multipath and a weak hierarchical level having low resistance to noise and mutipath, and the strong hierarchical level and the weak hierarchical level are a hierarchical level for a 1-segment broadcast and a hierarchical level for a 12-segment broadcast according to terrestrial digital broadcasting, respectively.

Furthermore, preferably, in the case where the output signal based on a signal in the weak hierarchical level is being outputted, when the index meets the signal processing portion activation condition, part of the signal processing units that is used to generate the output signal based on a signal in the strong hierarchical level is activated, and when the index meets the output switching condition, the output signal based on a signal in the strong hierarchical level is outputted by the output switching unit. Further, in this case, the index represents a reception status of a broadcast signal in the weak hierarchical level, a threshold value for determining that the index meets the output switching condition is set to an index value representing a reception status better than a reception status in which video and audio obtained from the output signal based on a signal in the weak hierarchical level are disturbed, and a threshold value for determining that the index meets the signal processing portion activation condition is set to an index value representing a reception status better than the reception status represented by the threshold value for determining that the output switching condition is met.

Moreover, preferably, in the case where the output signal based on a signal in the strong hierarchical level is being outputted, when the index meets the signal processing portion activation condition, part of the signal processing units that is used to generate the output signal based on a signal in the weak hierarchical level is activated, and when the index meets the output switching condition, the output signal based on a signal in the weak hierarchical level is outputted by the output switching unit. Further, in this case, the index represents a reception status of a broadcast signal in the weak hierarchical level obtained by intermittently activating one of the signal processing units that is used to generate the output signal based on a signal in the weak hierarchical level, a threshold value for determining that the index meets the output switching condition is set to an index value representing a reception status better than a reception status in which video and audio obtained from the output signal based on a signal in the weak hierarchical level are disturbed, and a threshold value for determining that the index meets the signal processing portion activation condition is set to an index value representing a reception status poorer than the reception status represented by the index value representing the reception status for determining that the output switching condition is met.

Furthermore, preferably, the threshold value for determining that the index meets the output switching condition and the threshold value for determining that the index meets the signal processing portion activation condition are set in advance, can be set manually by a user, or are updated to more appropriate values so as to correspond to a result of determining a use status.

Moreover, the reception status can be judged based on any one of a field strength, a BER, a block noise occurrence rate, a total value of a motion vector amount, and a manner in which audio is interrupted.

Furthermore, preferably, in the digital broadcast reception circuit according to the present invention, the signal processing units include a decoding section that has a circuit-based decoding portion in which signals in the plural hierarchical levels are decoded using a processing circuit and a software-based decoding portion in which signals in the plural hierarchical levels are decoded through execution of software. Further, in this configuration, the switching control unit obtains an index for judging the reception status, when the index meets a software-based decoding starting condition, the switching control unit starts decoding processing based on a signal in a selected one of the hierarchical levels in the software-based decoding portion, and, when the index meets an output switching condition, the switching control unit generates the switching signal so as to allow a signal obtained by processing in the software-based decoding section to be outputted from an output unit, and starts decoding processing based on a signal in the selected one of the hierarchical levels in the circuit-based decoding portion, after which the switching control unit generates the switching signal again so as to allow a signal obtained by processing in the circuit-based decoding portion to be outputted from the output unit.

Furthermore, preferably, the signal processing units include a decoding section that has a circuit-based decoding portion in which signals in the plural hierarchical levels are decoded using a processing circuit, and the switching control unit includes a software-based decoding portion in which signals in the plural hierarchical levels are decoded through execution of software. Further, in this configuration, the switching control unit obtains an index for judging the reception status, when the index meets a software-based decoding starting condition, the switching control unit starts decoding processing based on a signal in a selected one of the hierarchical levels in the software-based decoding portion, and, when the index meets an output switching condition, the switching control unit allows a signal obtained by processing in the software-based decoding section to be outputted from an output unit, and starts decoding processing based on a signal in the selected one of the hierarchical levels in the circuit-based decoding portion, after which the switching control unit generates the switching signal so as to allow a signal obtained by processing in the circuit-based decoding portion to be outputted from the output unit.

According to this configuration, a digital broadcast reception circuit can be obtained that achieves a reduction in system cost, and suppresses power consumption as well as a load on a computing power of a CPU or the like that performs software-based decoding processing.

Furthermore, preferably, a monitor section is provided that obtains an index representing a load status of a computing portion of the switching control unit, which performs processing using software, judges, based on the index, whether normal decoding processing using the software can be performed in the switching control unit, and, when the normal decoding processing using the software hardly can be performed in the switching control unit, instructs the software-based decoding portion to perform simplified software-based decoding processing.

According to this configuration, even in the case where a computing portion such as a CPU or the like used in the switching control unit has relatively low power, circuit-based processing can be performed smoothly.

Moreover, preferably, after allowing the signal obtained by processing in the circuit-based decoding portion to be outputted from the output unit, the signal processing units deactivate the software-based decoding portion. This configuration allows power consumption to be reduced further.

Hereinafter, the present invention will be described by way of embodiments with reference to the appended drawings.

In each of embodiments of the present invention, as for a tuner section, a demodulating section, and the like as specific circuit portions, which constitute signal processing units in a digital broadcast reception device, the respective basic configurations, operations, and the like of circuits thereof are not limited at all by the features of the present invention, and any known types of circuits can be used. Therefore, detailed descriptions of these circuits are omitted herein. Further, although the following explanation of the present invention describes an exemplary case where in the terrestrial digital television broadcasting one television program content is broadcast simultaneously in the forms of a 12-segment broadcast for fixed devices and a 1-segment broadcast for portable or mobile devices and received, the present invention is applicable to broadcast signals with no limitation thereto. Moreover, needless to say, the present invention is adaptable not only to the case of digital broadcasting in two hierarchical levels of different qualities but also to the case of digital broadcasting in three or more hierarchical levels of different qualities.

### (First Embodiment)

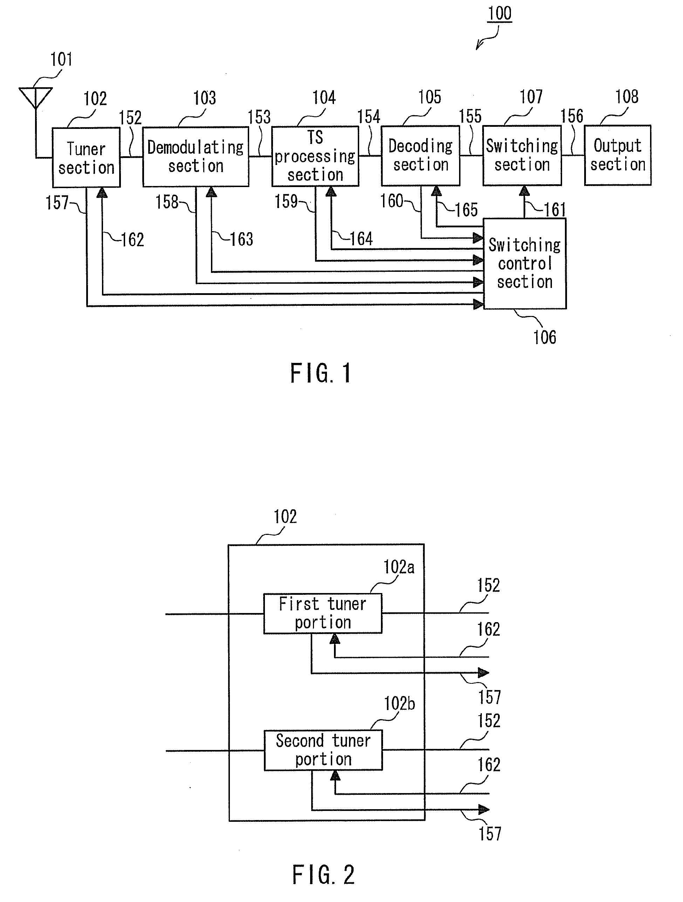

FIG. 1 is a diagram showing a functional configuration of a digital broadcast reception device 100 according to a first embodiment of the present invention.

As shown in FIG. 1, the digital broadcast reception device 100 according to this embodiment has a reception antenna 101, a tuner section 102 for receiving a digital broadcast signal wave, a demodulating section 103 that demodulates a received digital broadcast signal to a digital signal, a TS (transport stream) processing section 104 that separates various data contained in a digital signal from the digital signal, and a decoding section 105 that converts separated digital data into video, audio, or data of other types. The digital broadcast reception device 100 further includes a switching control section 106 as a switching control unit that, based on predetermined information obtained from these various sections, determines an output signal that is a signal of video or audio to be outputted, and also controls operations of the various sections, a switching section 107 as an output switching unit that switches an output signal based on a switching signal generated in the switching control section 106, and an output section 108 that outputs a signal of video, audio, or the like as an output signal.

The switching control section 106 as the switching control unit and the switching section 107 as the output switching unit, which form part of the digital broadcast reception device of the present invention, constitute a digital broadcast reception circuit. These sections control circuit portions as signal processing units for processing a digital broadcast signal so as to generate an output signal that is a video signal or an audio signal, which are the tuner section 102, the demodulating section 103, the TS processing section 104, and the decoding section 105. Further, in some cases, this digital broadcast reception circuit is packaged into a LSI.

A RF (Radio Frequency) signal is transmitted through a connection line 152 between the tuner section 102 and the demodulating section 103, and a digital signal such as a transport stream or the like is transmitted through a connection line 153 between the demodulating section 103 and the TS processing section 104. Further, digital data such as an elementary stream or the like is transmitted through a connection line 154 between the TS processing section 104 and the decoding section 105, and an output signal related to a video signal, an audio signal, or multimedia data of other types is transmitted through each of a connection line 155 between the decoding section 105 and the switching section 107 and a connection line 156 between the switching section 107 and the output section 108.

Furthermore, in the digital broadcast reception device 100 according to this embodiment, each of the circuit portions constituting the signal processing units that are the tuner section 102, the demodulating section 103, the TS processing section 104, and the decoding section 105, is connected bidirectionally to the switching control section 106 by connection lines so that an index representing a reception state obtained in each of the circuit portions of the signal processing units is transmitted to the switching control section 106, while control of activating and deactivating part or all of the circuit portions is performed based on a signal from the switching control section 106.

Specifically, as an index representing a reception status in the tuner section 102, for example, information related to a field strength is transmitted through a connection line 157 extending from the tuner section 102 to the switching control section 106, and, for example, information related to a BER (Bit Error Rate) representing a demodulation status of a digital signal in the demodulating section 103 is transmitted through a connection line 158 extending from the demodulating section 103. Further, information representing a processing status of data in the TS processing section 104 is transmitted through a connection line 159 extending from the TS processing section 104, and information representing a decoding status of video, audio, or data of other types in the decoding section 105 such as, for example, a block noise occurrence rate, a total value of a motion vector amount, a manner in which audio is interrupted, etc. is transmitted as information through a connection line 160 extending from the decoding section 105.

In a reversed direction, an information signal is transmitted via each of connection lines 162 to 165 that extend from the switching control section 106 to the functional sections, respectively. In each of the various sections as the signal processing units, this information signal is used for individual activation and deactivation of circuit portions that process signals in respective predetermined hierarchical levels.

In FIG. 1 showing the functional configuration of the digital broadcast reception device 100 according to this embodiment, a configuration is shown in which the circuit portions are connected directly to the switching control section 106 by the connection lines, respectively. However, in the digital broadcast reception device of the present invention, it is not required that the above-described signals be transmitted directly via the connection lines, and a configuration also is possible in which data is stored once in a register or a memory, and an exchange of necessary information is performed by making an access thereto.

The description is directed next to each of the circuit portions as the signal processing units, which receive digital broadcast signals transmitted as signals in plural hierarchical levels and process the received signals in plural hierarchical levels so as to generate output signals.

First, FIG. 2 shows the tuner section 102. The tuner section 102 of the digital broadcast reception device 100 according to this embodiment is composed of a first tuner portion 102a as a tuner circuit for processing a 12-segment broadcast signal in a weak hierarchical level having low resistance to noise and multipath, and a second tuner portion 102b as a tuner circuit for processing a 1-segment broadcast signal in a strong hierarchical level having high resistance to noise and multipath. Based on a digital broadcast wave received by the antenna 101 that is not shown, a RF broadcast signal as a 12-segment broadcast and a RF broadcast signal as a 1-segment broadcast are obtained by the first tuner portion 102a and the second tuner portion 102b of the tuner section 102, respectively. In FIG. 1, for the sake of convenience, each of the connection line 152 for transmitting a transmission signal from the tuner section 102 to the demodulating section 103 and the bidirectional connection lines 157 and 162 connecting the tuner section 102 to the switching control section 106 is shown as a single line. However, in practice, as two tuner circuits corresponding to processings of signals in two hierarchical levels and signals in two hierarchical levels, respectively, these tuner portions need to send data on a reception status and receive information on control of activation and deactivation separately, and thus separate connection lines are connected to these two tuner circuits.

In this embodiment, it has been explained and shown in the figure that a tuner circuit is formed of two completely separate systems that are the first tuner portion 102a and the second tuner portion 103b. However, the configuration of an actual tuner circuit, particularly of any upstream section thereof that converts a digital broadcast signal wave received by an antenna, is not necessarily such that a plurality of circuits that perform different types of processing depending on hierarchical levels of signals are provided in parallel but is often such that a portion is provided that processes a broadcast wave as it is, which is obtained as a result of synthesis of signals in plural hierarchical levels. The above explanation of this embodiment is not intended to exclude this type of actual circuit configuration and, for convenience in highlighting the features of the present invention in the explanation, merely focuses on a section in which processing of a signal in a weak hierarchical level and processing of a signal in a strong hierarchical level are performed separately.

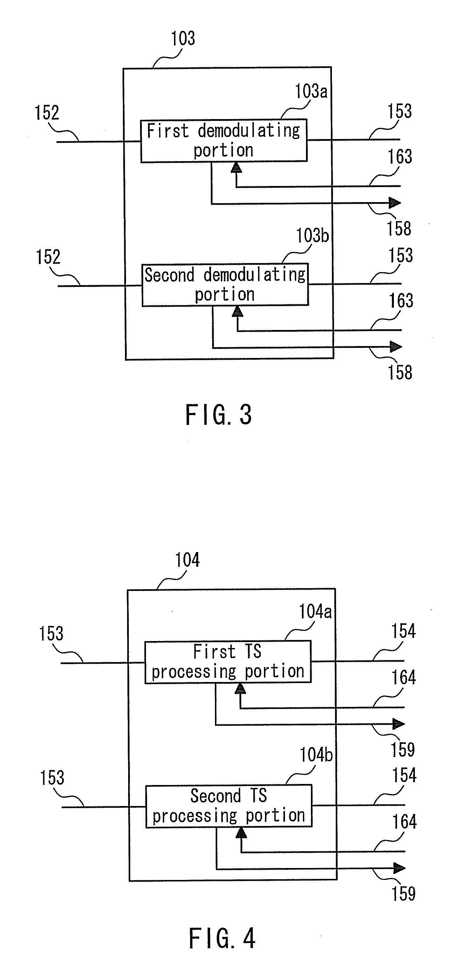

Next, the following describes the demodulating section 103 whose configuration is shown in FIG. 3. As shown in FIG. 3, the demodulating section 103 basically has a similar configuration to that of the tuner section 102 and is composed of the first demodulating portion 103a that is a demodulating circuit for processing a 12-segment broadcast signal in a weak hierarchical level having low resistance to noise and multipath and the second demodulating portion 103b that is a demodulating circuit for processing a 1-segment broadcast signal in a strong hierarchical level having high resistance to noise and multipath.

When a signal obtained as a RF signal by the tuner section 102 is inputted to each of the demodulating circuits through the connection line 152, an output that is a digital signal resulting from demodulation is outputted from each of the demodulating circuits to the TS processing section 104 via the connection line 153. Further, an index representing a reception status detected in each of the first demodulating portion 103a and the second demodulating portion 103b is transmitted to the switching control section 106 via the connection line 158, and the connection line 163 for transmitting a signal for performing individual activation and deactivation of the first demodulating portion 103a and the second demodulating portion 103b is connected to each of these demodulating portions.

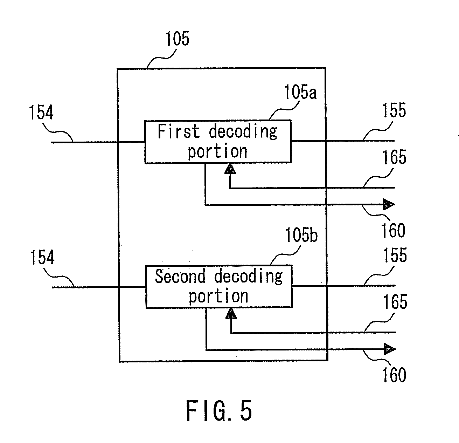

Next, FIG. 4 shows a configuration of the TS processing section 104. The TS processing section 104 is composed of a first TS processing portion 104a as a TS processing circuit that processes a 12-segment signal in a weak hierarchical level and a second TS processing portion 104b as a TS processing circuit that processes a 1-segment signal in a strong hierarchical level.
Similarly as shown in FIG. 5, the decoding section 105 also is composed of a first decoding portion 105a as a decoding circuit that processes a 12-segment signal in a weak hierarchical level, and a second decoding portion 105b as a decoding circuit that processes a 1-segment signal in a strong hierarchical level. The configuration of connection lines connected to the circuit portions is the same as the connections for the tuner section 102 and the demodulating section 103, which are shown in FIGs. 2 and 3, and therefore the detailed description thereof is omitted.

Furthermore, in the above explanation of the functional sections, on the precondition that two circuit portions that perform their respective functions are provided, it was assumed that the first circuit was used for a 12-segment broadcast and the second circuit was used for a 1-segment broadcast. However, there is no limitation thereto, and it is possible to use a circuit portion that is adaptable to both of a 12-segment broadcast and a 1-segment broadcast as a circuit portion that performs either or both of the functions related respectively to a 12-segment broadcast and a 1-segment broadcast.

The description is directed next to a method and operation of controlling the digital broadcast reception device according to the first embodiment of the present invention.

As one example of the case of switching among signals in plural hierarchical levels, the following explains a case in which, in the state where a 12-segment broadcast signal in a weak hierarchical level having low resistance to noise and multipath is received and processed so that video or audio is outputted as an output signal, when a reception status deteriorates, switching is performed to a state where a 1-segment broadcast signal in a strong hierarchical level having high resistance to noise and multipath is processed to be outputted as an output signal. More specifically, the following operation will be described. That is, in the first demodulating portion 103a that is demodulating a 12-segment broadcast signal, when a BER value that is an index representing a demodulation status of a digital signal is degraded, information regarding this degradation is transmitted to the switching control unit, and the switching control unit switches, without interruption, video or audio information as an output signal from information generated by processing a 12-segment broadcast signal to information generated by processing a 1-segment broadcast signal.

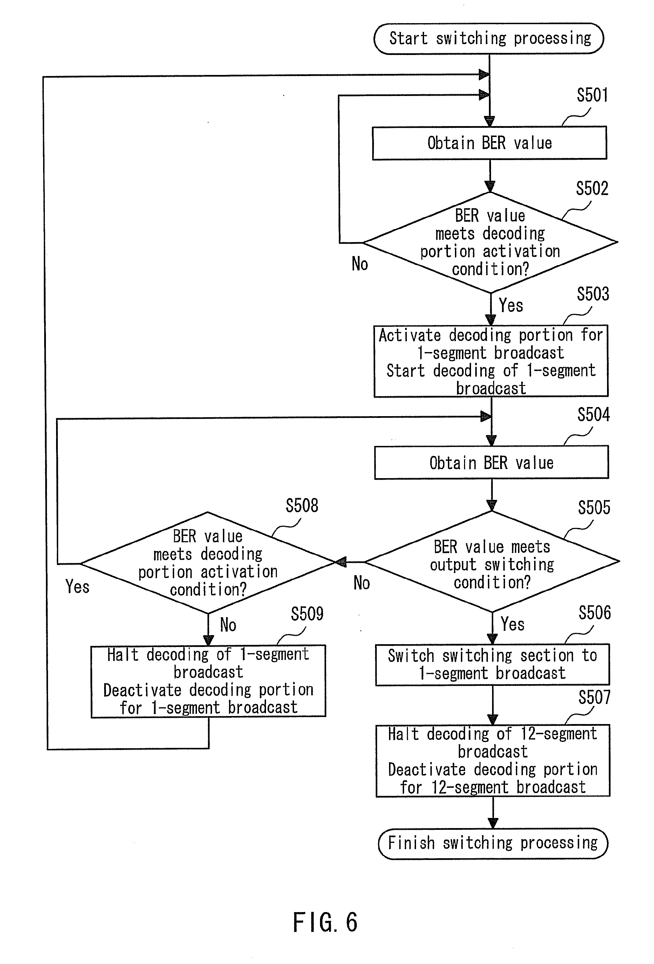

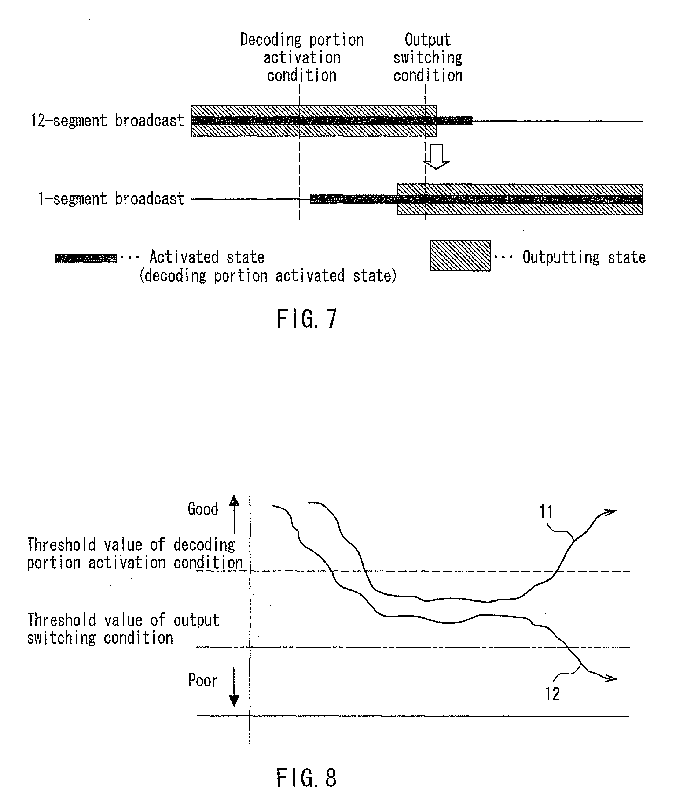

FIG. 6 is a flowchart showing a procedure of switching a hierarchical level performed in the switching control section 106 as the switching control unit. Further, FIG. 7 is a timing diagram showing a relationship of an activation state and a signal output state between the first decoding portion 105a and the second decoding portion 105b as part of the signal processing units. In FIG. 7, in order to show signal processing functions and output signals in the signal processing units collectively, these decoding portions are assumed to process and output a 12-segment broadcast signal and a 1-segment broadcast signal that are reception signals, respectively.

As shown at a left end of the timing diagram shown in FIG. 7, in the state where a reception status is good, in the decoding section that is to be the signal processing unit that processes a 12-segment broadcast signal, only the first decoding portion 105a has been activated to decode 12-segment broadcast digital data. Further, in the switching section 107, in accordance with an instruction from the switching control section 106, an output signal generated based on a 12-segment broadcast signal is being outputted selectively as a signal of video or audio. At this time, the second decoding portion 105b as the signal processing unit that performs signal processing based on a 1-segment broadcast signal has been deactivated, thereby suppressing power consumption.

In order to judge a reception status of a broadcast signal of a 12-segment broadcast, the switching control section 106 obtains a BER value as an index representing a reception state via the connection line 158 from the first demodulating portion 103a that is demodulating a 12-segment broadcast. This step corresponds to Step 501 in the flowchart shown in FIG. 6. Hereinafter, each of the steps in the flowchart shown in FIG. 6 is indicated as "S *** (* denotes a numeral)".

Then, it is determined whether the BER value meets a decoding portion activation condition as a signal processing portion activation condition (S502).

Herein, if the BER value does not meet the decoding portion activation condition, the procedure goes back to Step S501. If the BER value meets the decoding portion activation condition, the second decoding portion 105b is activated, via the connection line 165, so that decoding of digital data processed based on a 1-segment broadcast signal is started (S503).

At this time, although, as shown by bold lines in FIG. 7, both of the signal processing unit that processes a 12-segment broadcast signal and the signal processing unit that processes a 1-segment signal have been activated, as shown by wide hatching in FIG. 7, only an output signal generated by the signal processing unit that processes a 12-segment broadcast signal is being outputted.

In the state where, as described above, an index representing a reception state meets the decoding portion activation condition as the signal processing portion activation condition, the switching control section106 again obtains a BER value that is an index representing a reception status from the first decoding portion 103a (S504).

Then, it is determined whether the BER value meets an output switching condition (S505).

Herein, if the output switching condition is met, the switching control section 106 instructs the switching section 107, via a connection line 161, to perform output switching so that an output signal of video or audio to be outputted to the output section 108 is switched to an output of the second decoding portion 105b that performs signal decoding based on a 1-segment broadcast signal (S506).

Furthermore, via the connection line 165, the switching control section 106 sends a deactivation signal for deactivating the first decoding portion 105a so that decoding of digital data that is signal processing based on a 12-segment broadcast signal is halted (S507).

As a result, an output of the digital broadcast reception device is shifted from an output signal based on a 12-segment broadcast signal to an output signal based on a 1-segment broadcast signal without interruption. As shown in FIG. 7, an output signal is switched to an output signal generated based on a 1-segment broadcast signal.

Furthermore, if the output switching condition is not met in Step S505, it is determined again whether the BER value meets the decoding portion activation condition (S508).

At this time, if the decoding portion activation condition is met, the procedure goes back to Step S504, and it is judged again whether a BER value meets the output switching condition. If the decoding portion activation condition is not met, after decoding of digital data that is processing based on a 1-segment broadcast signal is halted, the second decoding portion 105b is deactivated (S509), and the procedure goes back to Step S501. In this case, outputting of an output signal generated as a result of processing based on a 12-segment broadcast signal is continued.

According to the above-described procedure, when a reception status deteriorates, video and audio to be outputted are switched to those of a 1-segment broadcast automatically and without interruption. At this time, the first decoding portion 105a is deactivated, and thus power consumption can be suppressed. Further, when a reception status deteriorates temporarily and then is recovered again, so that outputting of an output signal obtained by processing a 12-segment broadcast signal in a weak hierarchical level can be maintained, switching of an output is not performed, and outputting of an output signal that is a signal of video or audio generated based on a 12-segment broadcast signal is continued. At this time, the second decoding portion 105b is deactivated, and thus power consumption can be suppressed.

The forgoing explanation described an example in which a BER value obtained from the demodulating section 103 was used as an index for judging a reception status. However, as the index, as well as a field strength obtained from the tuner section 102 and information representing a processing status of data in the TS processing section 104, information representing a decoding status of video, audio, or data of other types in the decoding section 105 such as, for example, a block noise occurrence rate, a total value of a motion vector amount, a manner in which audio is interrupted, etc. can be used. Further, it also is possible to use, instead of using only one type of information among these types of information as a judgment criterion, plural types of information among these types of information in combination as an index for judging a reception status. Moreover, although in this embodiment described above, only an example has been explained in which a reception status is judged using each index obtained as a result of processing based on a 12-segment broadcast signal, it also is possible to use as an index, together with such an index, data obtained from processing based on a 1-segment broadcast signal.

Furthermore, although an example was shown in which after switching to an output signal generated based on a 1-segment broadcast signal, the first decoding portion 105a was deactivated as the decoding section 105, it also is possible to deactivate not only the first decoding portion 105a but also any of other functions that process a 12-segment broadcast signal, or alternatively, it also is possible to deactivate all of the functions that process a 12-segment broadcast signal. For example, in addition to the first decoding portion 105a, the first demodulating portion 103a and the first TS processing portion 104a are deactivated, and thus power consumption further can be suppressed.

Furthermore, in the above description, for convenience of explanation, it was assumed that the first demodulating portion 103a, the first TS processing portion 104a, and the first decoding portion 105a were circuits that perform processing of a 12-segment broadcast signal, and thus an example was shown in which these circuits were deactivated. However, if the first demodulating portion 103a and the second demodulating portion 103b of the demodulating section 103, the first TS processing portion 104a and the second TS processing portion 104b of the TS processing section 104, and the first decoding portion 105a and the second decoding portion 105b of the decoding section 105 are capable of processing both of a 12-segment broadcast signal and a 1-segment broadcast signal, there also may be a case where the second decoding portion 105b, the second demodulating portion 103b, and the second TS processing portion 104b are deactivated.

The description is directed next to a relationship between the above-described decoding portion activation condition as the signal processing portion activation condition and the above-described output switching condition with reference to FIG. 8.

FIG. 8 shows a conceptual rendering for illustrating how a radio wave state ameliorates or deteriorates with time, and in the figure, a reception status is shown to ameliorate in an upward direction and deteriorate in a downward direction. Further, in the digital broadcast reception circuit described in this embodiment, while a 12-segment broadcast signal in a weak hierarchical level is being received, a reception status deteriorates, and therefore, switching to an output signal generated by processing a 1-segment broadcast signal in a strong hierarchical level is performed. Accordingly, as shown in FIG. 8, a threshold value for determining that the decoding portion activation condition as a signal processing portion activation condition is met, which is a first threshold value as an index representing a reception status, is set to an index value representing a reception status better than that represented by a threshold value for determining that the output switching condition is met, which is a second threshold value.

As shown in FIG. 8, solid lines 11 and 12, each showing a BER value that represents a demodulation status of digital signal processing in the demodulating section 103 and thus is used as an index representing a reception status, both exhibit initial values representing a reception status better than that represented by the threshold value for determining that the decoding portion activation condition is met. In the case where the reception status then deteriorates and the value representing the reception status reaches and becomes lower than the threshold value for determining that the decoding portion activation condition is met, the second decoding portion 103b for generating an output signal based on a 1-segment broadcast signal is activated. In this case, as described above, if there is any deactivated portion in signal processing portions other than the decoding section 103, such a portion also is activated at this time. Herein, it is only required to bring about a state where signal processing is performed based on a 1-segment broadcast signal in a strong hierarchical level, and an output signal is generated based on a 1-segment broadcast signal.

In the case where, after that, as shown by the solid line 11, the reception status is recovered and the index representing the reception status again reaches and becomes higher than the threshold value for determining that the decoding portion activation condition is met, at the time when this threshold value is reached, the second decoding portion 103b is deactivated. In the case where when the above-described index representing the reception status reaches the threshold value for determining that the signal processing portion activation condition is met, any other signal processing unit has also been activated at the same time as the second decoding portion 103b, all of such signal processing units that have been activated are deactivated.

On the other hand, in the case where, as shown by the solid line 12, the reception status deteriorates directly from its previous status and the index representing the reception status reaches and even becomes lower than the threshold value for determining that the output switching condition is met, the switching section 107 as the output switching unit performs switching to an output signal generated based on a 1-segment broadcast signal. In this case, at a point in time when the index representing the reception status reaches the threshold value of the decoding portion activation condition, the generation of an output signal based on a 1-segment broadcast signal has been started, and thus from the instant when the switching control section 106 as the output control unit generates a switching signal for switching an output in the switching section 107, an output signal based on a 1-segment broadcast signal in a strong hierarchical level can be outputted without delay.

The threshold value for determining that the output switching condition is met is set to a BER value somewhat better than a BER value at which video and audio obtained in the case where an output signal is generated based on a 12-segment broadcast signal begin to be disturbed, and when this BER value is reached, it is judged that the output switching condition is met. Further, the threshold value for determining that the decoding portion activation condition is met is set to a BER value in a range between a BER value obtained in the case where the reception status is extremely good and a BER value as the above-described threshold value of the output switching condition, and when this BER value is reached, it is judged that the decoding portion activation condition is met.

Herein, if the threshold value for determining that the output switching condition is met and the threshold value for determining that the decoding portion activation condition is met are set to values representing a reception status that is too poor, in the case where the signal reception status changes abruptly, there is a possibility that switching to a state for generating an output signal based on a signal in a strong hierarchical level cannot be performed in time, so that a signal of video or audio being outputted is disturbed. Conversely, if these threshold values are set to values representing a reception status that is too good, such setting might result in the frequent occurrence of switching, thus reducing the effect of suppressing power consumption. Because of this, desirably, in setting these threshold values, a study for determining optimum values is conducted beforehand, and a microcomputer or the like is used to perform control so that these values are adjusted to optimum values based on past switching data through learning. Further, the user may set these threshold values manually while viewing, for example, a displayed image based on an output signal, though this could be a somewhat complicated process.

This embodiment described above showed an example in which a BER value obtained from the demodulating section 103 was used as an index for judging a reception status. However, as an index used for judgment, various types of information representing reception statuses obtained from the signal processing units including the demodulating section 103 can be used. Further, although the decoding portion activation condition was used as an example of the signal processing portion activation condition, it also is possible to use conditions for activating other signal processing units as the signal processing portion activation condition.

The description is directed next to another method and operation of controlling the digital broadcast reception device according to the first embodiment of the present invention. As one example of the case of switching among signals in plural hierarchical levels, the following explains a case in which, contrary to the above, in the state where a 1-segment broadcast signal in a strong hierarchical level having high resistance to noise and multipath is received and processed so that video or audio is generated as an output signal, when a reception status ameliorates, switching is performed to a state where a 12-segment broadcast signal in a weak hierarchical level having low resistance is processed to be outputted as an output signal. More specifically, the following operation will be described. That is, in the status in which an output signal is being generated based on a 1-segment broadcast signal, when a BER value that is an index representing a demodulation status of a digital signal obtained from the first demodulating portion 103a, which is activated intermittently for the detection of a reception status, becomes a value representing a better reception status, information regarding this state is transmitted to the switching control unit, and the switching control unit switches, without interruption, video or audio information as an output signal from information generated by processing a 1-segment broadcast signal to information generated by processing a 12-segment broadcast signal.

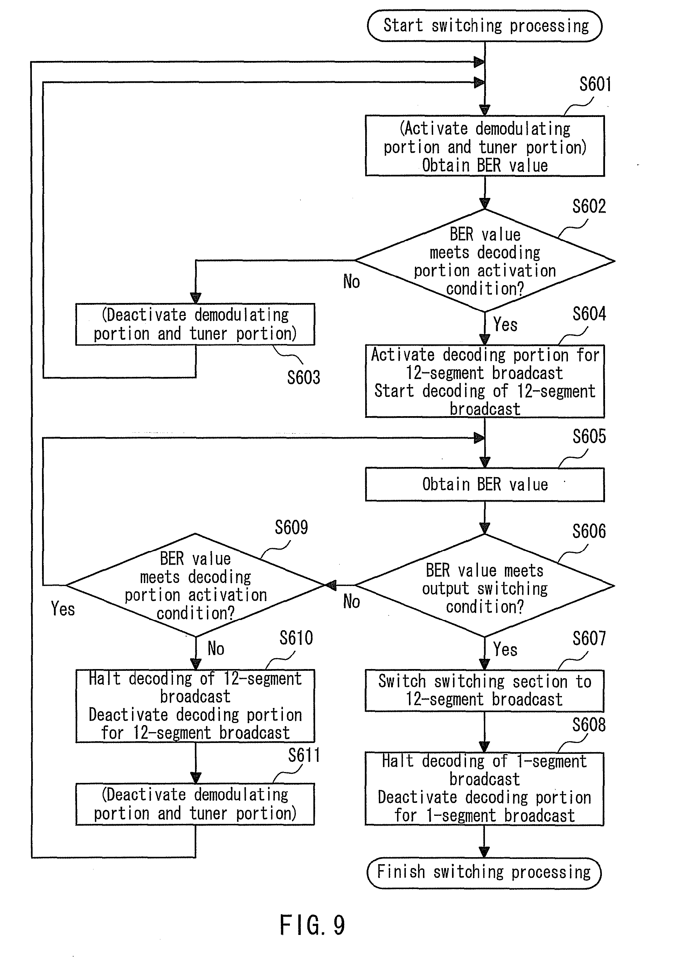

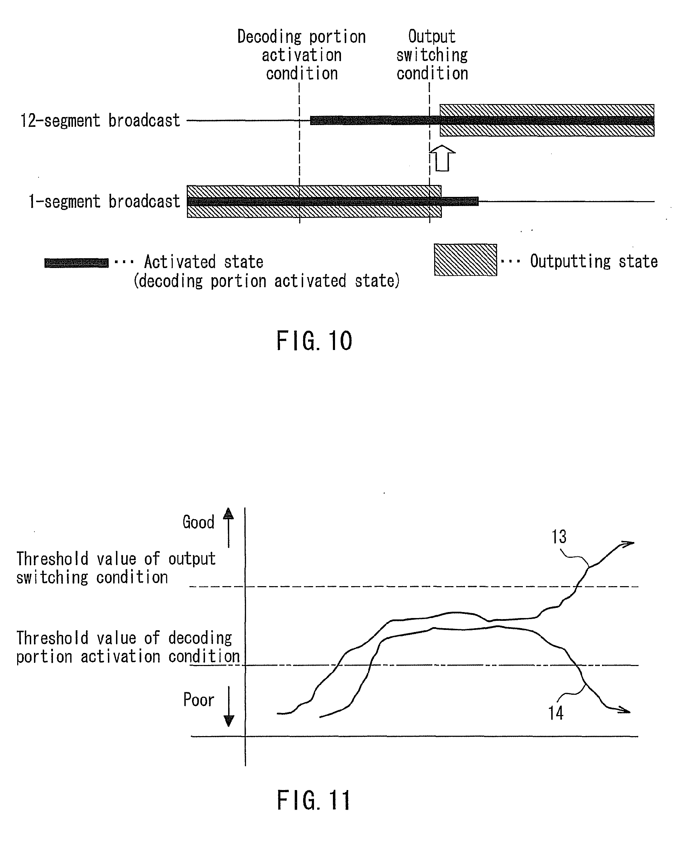

FIG. 9 is a flowchart showing a procedure of switching a hierarchical level performed in the switching control section 106 as the switching control unit in the digital signal reception device according to this embodiment. Further, FIG. 10 is a timing diagram showing a relationship of an activation state and a signal output state between the first decoding portion 105a and the second decoding portion 105b as the signal processing units. These figures are shown in the same manners as described respectively with regard to FIGs. 6 and 7 in the above-described first embodiment.

As shown at a left end of the timing diagram shown in FIG. 10, in the state where a reception status is not good, only the second decoding portion 105b that processes a 1-segment broadcast signal has been activated to perform signal processing based on a 1-segment broadcast signal. Further, in the switching section 107, in accordance with an instruction from the switching control section 106, an output signal generated by signal processing based on a 1-segment broadcast signal is being outputted selectively as a signal of video or audio. At this time, the first decoding portion 105a that performs signal processing based on a 12-segment broadcast signal has been deactivated, thereby suppressing power consumption.

Herein, in order to judge a reception status of a broadcast signal of a 12-segment broadcast, the switching control section 106 intermittently activates the first demodulating portion 103a that processes a 12-segment broadcast signal and thus obtains a BER value as an index representing a reception status via the connection line 158. This step corresponds to Step 601 in the flowchart shown in FIG. 9.

Then, it is determined whether the BER value meets a decoding portion activation condition as a signal processing portion activation condition (S602).

Herein, if the BER value does not meet the decoding portion activation condition, the operations of the first demodulating portion 105a and the first tuner portion 103a are halted, and the procedure goes back to Step S601. Further, if the BER value meets the decoding portion activation condition, the first decoding portion 105a is activated, via the connection line 165, so that decoding of digital data processed based on a 12-segment broadcast signal is started (S604).

At this time, although, as shown by bold lines in FIG. 10, both, the signal processing unit that processes a 1-segment broadcast signal and the signal processing unit that processes a 12-segment signal, have been activated, as shown by wide hatching in FIG. 10, only an output signal generated by processing a 1-segment broadcast signal is being outputted.

Next, the switching control section 106 again obtains a BER value as an index from the first demodulating portion 103a (S605).

Then, it is determined whether the BER value meets an output switching condition (S606).

Herein, if the output switching condition is met, the switching control section 106 sends to the switching section 107, via the connection line 161, a switching signal for instructing the switching section 107 to switch an output so that an output signal of video or audio to be outputted to the output section 108 is switched to an output of the first decoding portion 105a (S607).

As described above, since the generation of an output signal based on a 12-segment broadcast signal already has been started, an output of the digital broadcast reception device is shifted from an output signal based on a 1-segment broadcast signal to an output signal based on a 12-segment broadcast signal without interruption. Then, via the connection line 165, a deactivation signal for deactivating the second decoding portion 105b is sent so that decoding of digital data that is signal processing based on a 1-segment broadcast signal is halted (S608).

As a result, as shown in FIG. 10, switching to an output signal generated based on a 12-segment broadcast signal is performed, after which part of the signal processing units that generates an output signal based on a 1-segment broadcast signal is deactivated.

Furthermore, if the output switching condition is not met in Step S606, it is determined again whether the BER value meets the decoding portion activation condition (S609).

At this time, if the decoding portion activation condition is met, the procedure goes back to Step S605, and it is judged again whether a BER value meets the output switching condition. If the decoding portion activation condition is not met, after decoding of digital data that is processing based on a 12-segment broadcast signal is halted, the first decoding portion 105a is deactivated (S611), and the procedure goes back to Step S601. In this case, outputting of an output signal obtained as a result of processing based on a 1-segment broadcast signal is continued.

According to the above-described procedure, when a reception status ameliorates, video and audio to be outputted are switched to those of a 12-segment broadcast automatically and without interruption. At this time, the second decoding portion 105b is deactivated, and thus power consumption can be suppressed. Further, when a reception status ameliorates temporarily and then deteriorates again, so that outputting of an output signal obtained by signal processing based on a 1-segment broadcast signal in a strong hierarchical level is maintained, switching of an output is not performed, and outputting of an output signal that is video or audio generated by processing a 1-segment broadcast signal is continued. At this time, the first decoding portion 105a is deactivated, and thus power consumption can be suppressed.

In the above description of the operation of the digital broadcast reception device according to this embodiment, an example was shown in which a BER value obtained from the demodulating section 103 was used as an index for judging a reception status. However, this index for judging a reception status is not limited to a BER value and can be a field strength obtained from the tuner section 102 and information representing a processing status of data in the TS processing section 104. Further, as the index, information representing a decoding status of video, audio, or data of other types in the decoding section 105 such as, for example, a block noise occurrence rate, a total value of a motion vector amount, a manner in which audio is interrupted, etc. can be used. Moreover, an index totally different from these also may be used. Further, it also is possible to use, instead of using only one type of information among these types of information as a judgment criterion, plural types of information among these types of information in combination as an index for judging a reception status.

Not to mention, in the case where, as in this embodiment, a BER value obtained from the demodulating section 103 is used as an index representing a reception status, it is necessary that at least during a period of time required to obtain the index, the tuner section 102 also have been activated to transmit a RF signal to the demodulating section 103. Further, in this embodiment, in order to further reduce power consumption, only when obtaining the index representing a reception status, the first demodulating portion 103a was activated intermittently. However, in the case where power consumption of the first demodulating portion 103a itself is not large, and the effect of reducing power consumption could be obtained by deactivating part of the signal processing units downstream of the signal demodulating step such as, for example, the first decoding portion 105a or the like, it is not essential that the signal processing unit that generates an index for judging a reception status be activated intermittently. Moreover, although the above-described embodiment explained an example in which a reception status was judged using each index obtained as a result of processing based on a 12-segment broadcast signal, it also is possible to use as an index, data obtained from processing based on a 1-segment broadcast signal.

Furthermore, although an example was shown in which after switching to an output signal obtained by processing based on a 12-segment broadcast signal, the second decoding portion 105b was deactivated as the decoding section 105, it also is possible to deactivate, in addition to the second decoding portion 105b, part of other circuit portions constituting part of the signal processing units that generates an output signal based on a 1-segment broadcast signal, or alternatively it also is possible to deactivate all of these circuit portions at the same time. For example, in addition to the second decoding portion 105b, the second demodulating portion 103b and the second TS processing portion 104b also are deactivated, and thus power consumption further can be suppressed.

Furthermore, in the above description, for convenience of explanation, it was assumed that the second demodulating portion 103b, the second TS processing portion 104b, and the second decoding portion 105b were circuits that perform processing of a 1-segment broadcast signal, and thus an example was shown in which these circuits were deactivated. However, if the first demodulating portion 103a and the second demodulating portion 103b of the demodulating section 103, the first TS processing portion 104a and the second TS processing portion 104b of the TS processing section 104, and the first decoding portion 105a and the second decoding portion 105b of the decoding section 105 are capable of processing of both of a 12-segment broadcast signal and a 1-segment broadcast signal, there also may be a case where the first decoding portion 105a, the first demodulating portion 103a, and the first TS processing portion 104a are deactivated.

The description is directed next to a relationship between the decoding portion activation condition as the signal processing portion activation condition and the output switching condition with reference to FIG.11. Similarly to FIG. 8, FIG. 11 shows a conceptual rendering for illustrating how a radio wave state ameliorates or deteriorates with time, and in the figure, a reception status is shown to ameliorate in an upward direction and deteriorate in a downward direction. Further, in the digital broadcast reception circuit described in this embodiment, while a 1-segment broadcast signal in a strong hierarchical level is being received, a reception status ameliorates, and therefore, switching to an output signal generated by processing a 12-segment broadcast signal in a weak hierarchical level is performed. Accordingly, as shown in FIG. 11, unlike the case shown in FIG. 8, a threshold value for determining that the decoding portion activation condition as the signal processing portion activation condition is met, which is a first threshold value, is set to a value representing a reception status poorer than that represented by a threshold value for determining that the output switching condition is met, which is a second threshold value.

As shown in FIG. 11, solid lines 13 and 14, each showing a BER value that is an index representing a demodulation status of digital signal processing in the demodulating section 103, both exhibit initial values representing a reception status poorer than that represented by the threshold value for determining that the decoding portion activation condition is met. In the case where the reception status then ameliorates and the value representing the reception status reaches and becomes higher than the threshold value for determining that the decoding portion activation condition is met, the first decoding portion 103a for generating an output signal based on a 12-segment broadcast signal is brought from the previous state of being activated intermittently for creating an index for judging a reception status to the state of being operated continuously for generating an output signal. In this case, as described above, if there is any deactivated portion among part of the circuit portions that processes a 12-segment broadcast signal other than the decoding section 103, such a portion also is activated at this time. Herein, it is only required to bring about a state where signal processing is performed based on a 12-segment broadcast signal in a weak hierarchical level, and an output signal is generated based on a 12-segment broadcast signal.

In the case where, after that, as shown by the solid line 14, the reception status deteriorates again and the index representing the reception status reaches and becomes lower than the threshold value for determining that the decoding portion activation condition is met, at the time when this threshold value is reached, the first decoding portion 103a is deactivated again and brought back to the state of being activated intermittently for obtaining an index. In the case where any other signal processing portion also has been activated together with the first decoding portion 103a, of course, all of such signal processing portions are deactivated. On the other hand, in the case where, as shown by the solid line 13, the reception status ameliorates directly from its previous status and the index representing the reception status reaches and becomes higher than the threshold value for determining that the output switching condition is met, the switching section 107 as the output switching unit performs switching to an output signal generated based on a 12-segment broadcast signal. In this case, at a point in time when the index representing the reception status reaches the threshold value for determining that the decoding portion activation condition is met, the generation of an output signal based on a 12-segment broadcast signal has been started, and thus from the instant when the switching control section 106 as the output control unit generates a switching signal for switching an output in the switching section 107, an output signal based on a 12-segment broadcast signal in a weak hierarchical level is outputted without delay.

The threshold value for determining that the output switching condition is met is set to a BER value somewhat better than a BER value at which video and audio obtained in the case where an output signal is generated based on a 12-segment broadcast signal begin to be disturbed, and when this BER value is reached, it is judged that the output switching condition is met. Further, the threshold value for determining that the decoding portion activation condition is met is set to a BER value in a range between a BER value obtained in the case where the reception status is extremely poor and a BER value as the above-described threshold value of the output switching condition, and when this BER value is reached, it is judged that the decoding portion activation condition is met.

Herein, if the threshold value for determining that the output switching condition is met and the threshold value for determining that the decoding portion activation condition is met are set to values representing a reception status that is too poor, in the case where the signal reception status changes abruptly, disturbed video pictures and the like might be provided to viewers, and the length of time in which the generation of an output signal is performed based on a signal in a weak hierarchical level having low resistance to noise or the like might be increased, resulting in a reduced effect of suppressing power consumption. Conversely, if these threshold values are set to indices representing a reception status that is too good, a shift to processing of generating an output signal based on a 12-segment broadcast signal might be delayed, which has low resistance to noise or the like but contains plenty of information as image information and enables a display of a basically high-resolution image. This results in a large loss of time as an occasion when a high-level image output can be achieved. Because of this, also in this embodiment, desirably in setting these threshold values, a study for determining optimum values is conducted beforehand, and a microcomputer or the like is used to perform control so that these values are adjusted to optimum values based on past switching data through learning. Furthermore, the user may set these threshold values manually, though this could be a somewhat complicated process.

Furthermore, this embodiment described above also showed an example in which a BER value obtained from the demodulating section 103 was used as an index for judging a reception status. However, a reception status also can be judged based on an index obtained from other indices from the signal processing portions including the demodulating section 103. Further, although the decoding portion activation condition was used as an example of the signal processing portion activation condition, it also is possible to use conditions for activating other signal processing portions as the signal processing portion activation condition.

### (Second Embodiment)

Next, as a second embodiment of the digital broadcast reception device according to the present invention, a digital broadcast reception device will be described, which performs output signal processing in which as decoding processing for obtaining an output signal not only the decoding processing by means of a circuit unit performed in the above-described embodiment but also decoding processing by means of software using a CPU or the like is performed in combination therewith.

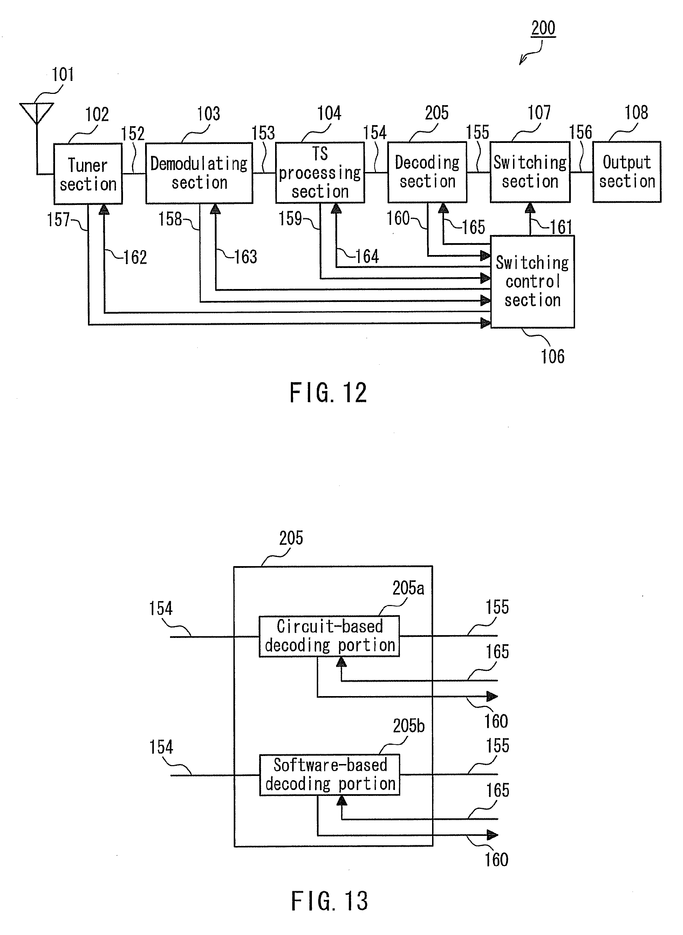

FIG. 12 is a diagram showing a functional configuration of a digital broadcast reception device 200 according to the second embodiment of the present invention.

Except for a decoding section 205, the basic configuration of the digital broadcast reception device 200 according to this embodiment shown in FIG.12 is the same as that of the digital broadcast reception device 100 according to the first embodiment of the present invention shown in FIG.1. That is, the digital broadcast reception device 200 includes a reception antenna 101, a tuner section 102, a demodulating section 103, a TS processing section 104, the decoding section 205, a switching control section 106 as a switching control unit, a switching section 107 as an output switching unit that switches an output signal based on a switching signal generated by the switching control section 106, and an output section 108 that outputs a signal of video, audio, or the like as an output signal.

Also in the digital broadcast reception device 200 according to this embodiment, the switching control section 106 as the switching control unit and the switching section 107 as the output switching unit constitute a digital broadcast reception circuit. These sections control circuit portions as signal processing units for processing a digital broadcast signal so as to generate an output signal that is a video signal or an audio signal, which are the tuner section 102, the demodulating section 103, the TS processing section 104, and the decoding section 205. Further, in some cases, this digital broadcast reception circuit is packaged into a LSI. The signal transmission through a connection line between each of the circuit portions and the switching control section 106 and through a connection line between the switching control section 106 and the switching section 107 is the same as that in the digital broadcast reception device 100 shown as the first embodiment, and thus detailed description thereof is omitted.

The description is directed next to an inner configuration of the decoding section 205 that characterizes this embodiment with reference to FIG. 13.

As shown in FIG. 13, in the digital broadcast reception device 200 according to this embodiment, the decoding section 205 includes a circuit-based decoding portion 205a that can decode, by means of a processing circuit, both of digital data of a 12-segment signal in a weak hierarchical level and digital data of a 1-segment signal in a strong hierarchical level, and a software-based decoding portion 205b that is a computing portion such as a CPU or the like that can realize, through execution of software, processing of decoding digital data of a 12-segment signal in a weak hierarchical level and digital data of a 1-segment signal in a strong hierarchical level. The circuit-based decoding portion 205a is designed to decode digital data by means of a processing circuit and therefore cannot perform decoding of digital data of a 12-segment signal and decoding of digital data of a 1-segment signal simultaneously, thus performing decoding of data from either one of these signals.

Video, audio and data of other types obtained by conversion in the circuit-based decoding portion 205a and the software-based decoding portion 205b in the decoding section 205 are outputted to the switching section 107 via a connection line 155. Then, switching of a signal obtained by decoding in either of the circuit-based decoding portion 205a and the software-based decoding portion 205b is performed in the switching section 107, and a signal designated as a result of the switching is outputted to the output section 108. Further, a signal related to an index representing a decoding status of video, audio or data of other types in each of the circuit-based decoding portion 205a and the software-based decoding portion 205b is outputted to the switching control section 106 via a connection line 160. Further, a signal for deactivating/activating the software-based decoding portion 205b is transmitted to the switching control section 106 via a connection line 165.

The description is directed next to a method and operation of controlling the digital broadcast reception device 200 according to the second embodiment of the present invention.

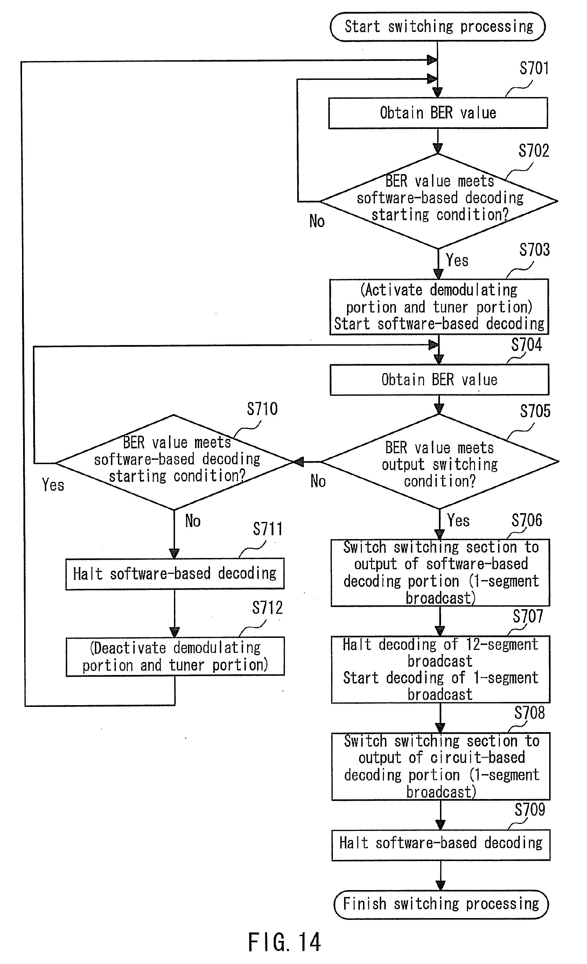

As one example of the case of switching among signals in plural hierarchical levels, the following explains a case in which, in the state where a 12-segment broadcast signal in a weak hierarchical level is received and processed so that video or audio is outputted as an output signal, and, when a reception status deteriorates, switching is performed to a state where a 1-segment broadcast signal in a strong hierarchical level is processed to be outputted as an output signal. Specifically, the following operation will be described with reference to FIGs. 14 to 17. That is, also in this case, similarly to the above-described case of the first embodiment, a BER value from the demodulating section 103 is used as a signal representing a reception status, and the switching control unit switches, without interruption, video or audio information as an output signal from information generated by processing a 12-segment broadcast signal to information generated by processing a 1-segment broadcast signal.

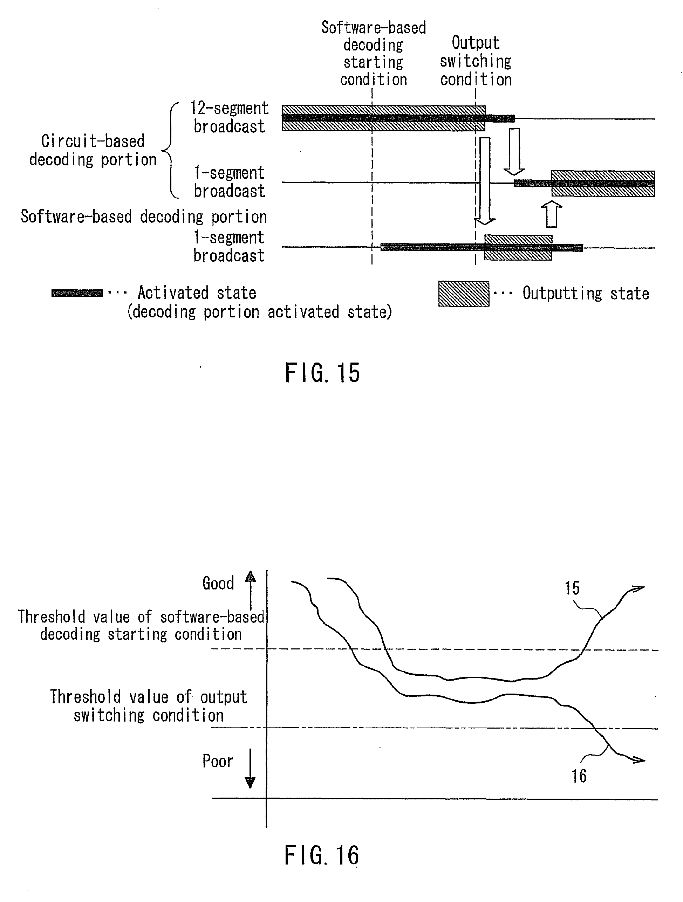

FIG. 14 is a flowchart showing a procedure of switching a hierarchical level performed in the switching control section 106. Further, FIG. 15 is a timing diagram showing a relationship of an activation state and a signal output state between the circuit-based decoding portion 205a and the software-based decoding portion 205b that constitute the decoding section 205.

As shown at a left end of the timing diagram shown in FIG.15, in the state where a reception status is good, in the circuit-based decoding portion, a 12-segment broadcast signal is processed so that 12-segment broadcast digital data is decoded. Further, in accordance with an instruction from the switching control section 106, an output signal generated based on a 12-segment broadcast signal is outputted selectively as a signal of video or audio. At this time, the software-based decoding portion 205b has been deactivated, thereby suppressing a load on the CPU.

As shown in the flowchart in FIG. 14, the switching control section 106 obtains a BER value as an index representing a reception state via a connection line 158 from a first demodulating portion 103a of the demodulating section 103, which is demodulating a 12-segment broadcast (S701).

Then, it is determined whether the BER value meets a software-based decoding starting condition (S702).

Herein, if the software-based decoding starting condition is not met, the procedure goes back to Step S701. Further, if the software-based decoding starting condition is met, software-based decoding processing of 1-segment broadcast digital data is started in the software-based decoding portion 205b (S703).

At this time, if a portion that performs processing of a 1-segment broadcast signal has been deactivated in each of the demodulating section 103 and the tuner portion 102 upstream of the demodulating section 103, a second demodulating portion 103b and a second tuner portion 102b are activated temporarily.

At this time, although, as shown by bold lines in FIG. 15, both of the circuit-based decoding portion and the software-based decoding portion have been activated, as shown by wide hatching in FIG. 15, only an output signal that is a signal generated in the circuit-based decoding portion and, in this case, is created based on a 12-segment broadcast signal is being outputted.

Next, the switching control section 106 again obtains a BER value from the demodulating section 103 (S704).

Then, it is determined whether the BER value meets an output switching condition (S705).

Herein, if the output switching condition is met, via a connection line 161, an instruction to perform output switching is provided to the switching section 107 so that video or audio to be outputted to the output section 108 is switched to an output of the software-based decoding portion 205b (S706).

Then, in the circuit-based decoding portion 205a, decoding of 12-segment broadcast digital data is halted, and switching to decoding of 1-segment broadcast digital data is performed (S707).

Via the connection line 161, a further instruction to perform output switching is provided to the switching section 107 so that video or audio to be outputted to the output section 108 is switched to an output of the circuit-based decoding portion 205a (S708).

FIG. 15 shows this series of output signal switching. After that, in the software-based decoding portion 205b, software-based decoding processing of 1-segment broadcast digital data is halted (S709).

Furthermore, if the output switching condition is not met in Step S705, it is determined again whether the BER value meets the software-based decoding starting condition (S710).

At this time, if the software-based decoding starting condition is met, the procedure goes back to Step S704, and if not, after software-based decoding processing of 1-segment broadcast digital data is halted (S711), the procedure goes back to Step S701.

At this time, if the second demodulating portion 103b and the second tuner portion 102b have been activated in Step S703, these portions are deactivated again (S712).

According to this procedure, in the state where video and audio of a 12-segment broadcast are being outputted in the circuit-based decoding portion 205a that cannot process 12-segment broadcast digital data and 1-segment broadcast digital data simultaneously, when a radio wave reception status deteriorates, software-based decoding processing of 1-segment broadcast digital data is performed temporarily by the software-based decoding portion 205b, and thus video and audio to be outputted are switched to those of a 1-segment broadcast automatically and without interruption. Further, after a state has been brought about in which video and audio of a 1-segment broadcast are being outputted in the circuit-based decoding portion 205a, software-based decoding processing in the software-based decoding portion 205b has been halted, thereby suppressing a load on the CPU.

Furthermore, when the radio wave reception status deteriorates temporarily and then is recovered again, switching of an output is not performed, and outputting of video or audio of a 12-segment broadcast is continued. Also at this time, software-based decoding processing in the software-based decoding portion 205b has been halted, thereby suppressing a load on the CPU.

The above description showed an example in which a BER value obtained from the demodulating section 103 was used as an index for judging a radio wave reception status. However, as the index, other indices obtained from the tuner section 102, the demodulating section 103, the TS processing section 104, and the decoding section 205 also can be used. Further, although an example was shown in which only a BER value was used as a criterion for judgment performed in the switching control section 106, the judgment also can be performed based on a combination of a plurality of indices obtained from the various sections. Further, the judgment also can be performed based on not only an index related to a reception status of a 12-segment broadcast but also, in combination therewith, an index related to a reception status of a 1-segment broadcast.

Furthermore, although an example was shown in which, after output switching is performed, only the software-based decoding processing in the software-based decoding portion 205b was halted, it also is possible to deactivate all or part of functions related to an output of a 12-segment broadcast. For example, the first demodulating portion 103a and a first TS processing portion 104a also are deactivated, and thus power consumption further can be suppressed. Further, in the above description, for convenience of explanation, it was assumed that the first demodulating portion 103a and the first TS processing portion 104a performed processing related to an output of a 12-segment broadcast, and thus an example was shown in which the first demodulating portion 103a and the first TS processing portion 104a were deactivated. However, if the first demodulating portion 103a, the second demodulating portion 103b, the first TS processing portion 104a, and the second TS processing portion 104b are capable of processing both of a 12-segment broadcast and a 1-segment broadcast, there also may be a case where the second demodulating portion 103b, the second TS processing portion 104b, and the like are deactivated.

The description is directed next to the above-described software-based decoding starting condition and output switching condition with reference to FIG. 16. In FIG. 16, radio wave states are shown in the same manner as in FIGs. 8 and 11.

In this example, a threshold value of the output switching condition is set to a BER value somewhat better than a BER value at which, when the BER value is degraded, video and audio of a 12-segment broadcast begin to be disturbed. Further, a threshold value of the software-based decoding starting condition is set to a BER value in a range between a BER value obtained in the case where a radio wave reception status is extremely good and the BER value as the threshold value of the output switching condition. When a BER value is degraded to become worse than the threshold value of the software-based decoding starting condition, it is judged that the software-based decoding starting condition is met, and when the BER value further is degraded to become worse than the threshold value of the output switching condition, it is judged that the output switching condition is met.

As shown in FIG. 16, solid lines 15 and 16, each showing a BER value that represents a demodulation status of digital signal processing in the demodulating section 103 and thus is used as an index representing a reception status, both exhibit initial values representing a reception status better than that represented by the threshold value for determining that the software-based decoding starting condition is met. In the case where the reception status deteriorates and the value representing the reception status reaches and becomes lower than the threshold value for determining that the software-based decoding starting condition is met, the software-based decoding portion 205b is activated, thereby bringing about a state where an output signal can be generated based on a 1-segment broadcast signal. In this case, as described above, if there is any deactivated portion among portions for performing processing of a 1-segment signal in the signal processing portions, such a portion also is activated at this time. Herein, it is only required to bring about a state where signal processing is performed based on a 1-segment broadcast signal in a strong hierarchical level, and an output signal is generated based on a 1-segment broadcast signal.

In the case where, after that, as shown by the solid line 15, the reception status is recovered and the index representing the reception status again reaches and becomes higher than the threshold value for determining that the software-based decoding starting condition is met, at the time when this threshold value is reached, the software-based decoding portion 205b is deactivated. In the case where when the above-described index representing the reception status reaches the threshold value for determining that the software-based decoding starting condition is met, any other signal processing unit has also been activated at the same time as the software-based decoding portion 205b, such a signal processing unit that has been activated is deactivated.

On the other hand, in the case where, as shown by the solid line 16, the reception status deteriorates directly from its previous status and the index representing the reception status reaches and even becomes lower than the threshold value for determining that the output switching condition is met, the switching section 107 as the output switching unit performs switching to an output signal based on a 1-segment broadcast signal, which is generated by the software-based decoding portion 205b. In this case, at a point in time when the index representing the reception status reaches the threshold value of the software-based decoding starting condition, the generation of an output signal based on a 1-segment broadcast signal has been started by the software-based decoding portion 205b, and thus from the instant when the switching control section 106 as the output control unit generates a switching signal for switching an output in the switching section 107, an output signal based on a 1-segment broadcast signal in a strong hierarchical level can be outputted without delay.

After that, in the state where the outputting of an output signal based on a 1-segment broadcast is continued, switching is performed from an output signal based on the software-based decoding portion 205b to an output signal based on the circuit-based decoding portion 205a.

If these threshold values are set to values that are too bad, in the case where the radio wave reception status changes abruptly, there is a possibility that switching cannot be performed in time, so that video or audio being outputted is disturbed. Conversely, if these threshold values are set to values that are too good, such setting might result in the frequent occurrence of switching, thus hindering the suppression of power consumption. Because of this, desirably in setting these threshold values, a study for determining optimum values is conducted beforehand, and these values are set so as to be adjusted to optimum values through learning. Further, the user may set these threshold values manually, though this could be a somewhat complicated process.

The above-described embodiment showed an example in which a BER value obtained from the demodulating section 103 was used as an index for judging a radio wave reception status. However, this embodiment also is applicable to the case of using, as the index, other indices obtained from the tuner section 102, the demodulating section 103, the TS processing section 104, and the decoding section 205. Further, this example is merely illustrative, and any index and judging method may be used as long as, when the radio wave reception status deteriorates, the software-based decoding starting condition is met before the output switching condition is met, and the output switching condition is met before video and audio being outputted begin to be disturbed. For example, a block noise occurrence rate, a total value of a motion vector amount, a manner in which an audio is interrupted, etc. can be used as the index.

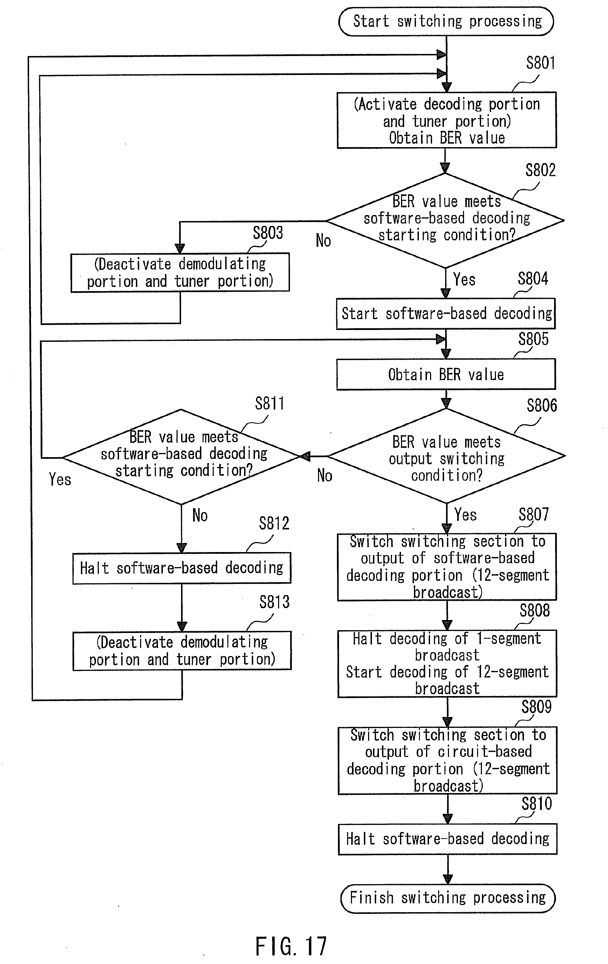

The description is directed next to another example of the method and operation of controlling the digital broadcast reception device 200 according to the second embodiment of the present invention. Specifically, this example describes the following operation with reference to FIGs. 17 to 19. That is, in the state where a radio wave reception status is poor and video and audio of a 1-segment broadcast are being outputted, the radio wave reception status is recovered and a BER value is improved, which is an index representing a demodulation status of a digital signal in the circuit-based demodulating portion 103a that is performing demodulation of a 12-segment broadcast, video and audio to be outputted are switched from those of a 1-segment broadcast to those of a 12-segment broadcast without interruption.

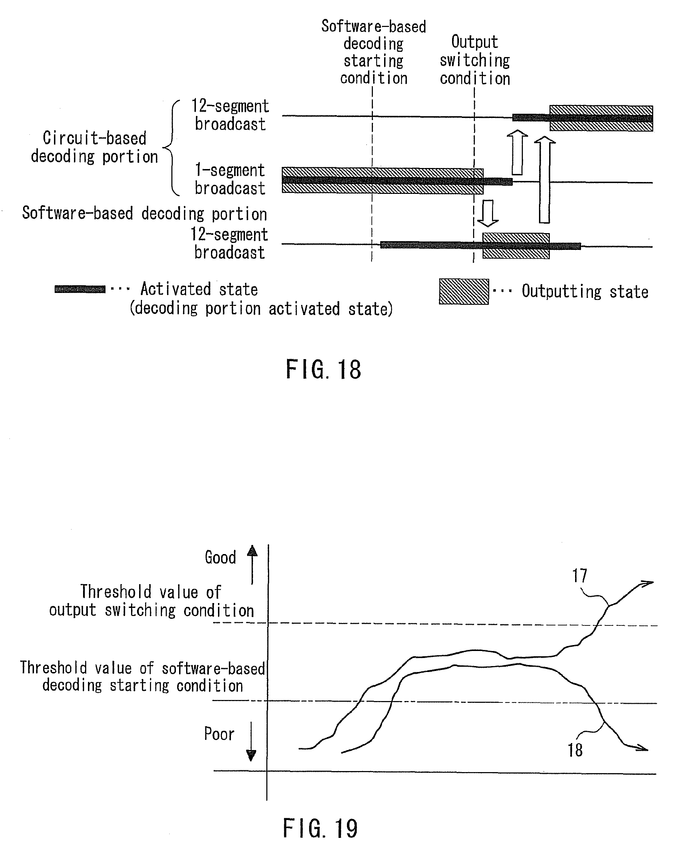

FIG. 17 is a flowchart showing a procedure of switching a hierarchical level performed in the switching control section 106. Further, FIG. 18 is a timing diagram showing a relationship of an activation state and a signal output state between the circuit-based decoding portion 205a and the software-based decoding portion 205b that constitute the decoding section 205.

As shown at a left end of the timing diagram shown in FIG. 18, in the state where a reception status is not good, in the circuit-based decoding portion, processing of a 1-segment broadcast signal is being performed so that 1-segment broadcast digital data is decoded. Further, in the switching section 107, in accordance with an instruction from the switching control section 106, an output signal generated based on a 1-segment broadcast signal is being outputted selectively as a signal of video or audio. At this time, the software-based decoding portion 205b has been deactivated, thereby suppressing a load on the CPU.

As shown in the flowchart in FIG. 17, in order to determine a current reception status of a 12-segment broadcast, the switching control section 106 obtains a BER value from the demodulating section 103 via the connection line 158 (S801).

At this time, if the demodulating section 103 and the tuner section 102 upstream thereof have been deactivated, the first demodulating portion 103a and a first tuner portion 102a are activated temporarily. Then, it is determined whether the BER value meets a software-based decoding starting condition (S802).

Herein, if the software-based decoding starting condition is not met, the procedure goes back to Step S801. At this time, if the first demodulating portion 103a and the first tuner portion 102a have been activated in Step S801, these portions are deactivated again (S803).

Furthermore, if the software-based decoding starting condition is met, software-based decoding processing of 12-segment broadcast digital data is started in the software-based decoding portion 205b (S804).

At this time, although, as shown by bold lines in FIG. 18, both of the circuit-based decoding portion and the software-based decoding portion have been activated, as shown by wide hatching in FIG. 18, only an output signal that is a signal generated in the circuit-based decoding portion and, in this case, is creased based on a 1-segment broadcast signal is being outputted.

Next, the switching control section 106 again obtains a BER value from the demodulating section 103 (S805).

Then, it is determined whether the BER value meets an output switching condition (S806).

Herein, if the output switching condition is met, via the connection line 161, an instruction to perform output switching is provided to the switching section 107 so that video or audio to be outputted to the output section 108 is switched to an output of the software-based decoding portion 205b (S807).

Then, in the circuit-based decoding portion 205a, decoding of 1-segment broadcast digital data is halted, and switching to decoding of 12-segment broadcast digital data is performed (S808).

Via the connection line 161, a further instruction to perform output switching is provided to the switching section 107 so that video or audio to be outputted to the output section 108 is switched to an output of the circuit-based decoding portion 205a (S809).

FIG. 18 shows this series of output signal switching. After that, in the software-based decoding portion 205b, software-based decoding processing of 12-segment broadcast digital data is halted (S810).

Furthermore, if the output switching condition is not met in Step 806, it is determined again whether the BER value meets the software-based decoding starting condition (S811).

At this time, if the software-based decoding starting condition is met, the procedure goes back to Step S805, and if not, after software-based decoding processing of 12-segment broadcast digital data is halted (S812), the procedure goes back to Step S801.

At this time, if the first demodulating portion 103a and the first tuner portion 102a have been activated in Step S801, these portions are deactivated again (S813).

According to the above-described procedure, in the state where video and audio of a 1-segment broadcast are being outputted in the circuit-based decoding portion 205a that cannot process 12-segment broadcast digital data and 1-segment broadcast digital data simultaneously, when a radio wave reception status is recovered, software-based decoding processing of 12-segment broadcast digital data is performed temporarily by the software-based decoding portion 205b, and thus video and audio to be outputted are switched to those of a 12-segment broadcast automatically and without interruption. Further, after a state has been brought about in which video and audio of a 12-segment broadcast are being outputted in the circuit-based decoding portion 205a, software-based decoding processing in the software-based decoding portion 205b has been halted, thereby suppressing a load on the CPU.

Furthermore, when the radio wave reception status is recovered temporarily and then deteriorates again, switching of an output is not performed, and outputting of video or audio of a 1-segment broadcast is continued. At this time, software-based decoding processing in the software-based decoding portion 205b has been halted, thereby suppressing a load on the CPU.

The above description showed an example in which a BER value obtained from the demodulating section 103 was used as an index for judging a radio wave reception status. However, as the index, other indices obtained from the tuner section 102, the demodulating section 103, the TS processing section 104, and the decoding section 205 also can be used. Further, although an example was shown in which only a BER value was used as a criterion for judgment performed in the switching control section 106, the judgment also can be performed based on a combination of a plurality of indices obtained from the various sections. Further, the judgment can be performed based on not only an index related to a reception status of a 12-segment broadcast but also, in combination therewith, an index related to a reception status of a 1-segment broadcast.

Furthermore, although an example was shown in which after output switching is performed, only the software-based decoding processing in the software-based decoding portion 205b was halted, it also is possible to deactivate all or part of functions related to an output of a 1-segment broadcast. For example, the second demodulating portion 103b and the second TS processing portion 104b also are deactivated, and thus power consumption further can be suppressed. Further, in the above description, for convenience of explanation, it was assumed that the second demodulating portion 103b and the second TS processing portion 104b performed processing related to an output of a 1-segment broadcast, and thus an example was shown an example in which the second demodulating portion 103b and the second TS processing portion 104b were deactivated. However, if the first demodulating portion 103a, the second demodulating portion 103b, the first TS processing portion 104a, and the second TS processing portion 104b are capable of processing both of a 12-segment broadcast and a 1-segment broadcast, there also may be a case where the first demodulating portion 103a, the first TS processing portion 104a, and the like are deactivated.

The description is directed next to the above-described software-based decoding starting condition and output switching condition with reference to FIG. 19. In FIG. 19, radio wave states are shown in the same manner as in FIGs. 8, 11 and 16.

In this example, a threshold value of the output switching condition is set to a BER value somewhat better than a BER value at which, when the BER value is degraded, video and audio of a 12-segment broadcast begin to be disturbed. Further, a threshold value of the software-based decoding starting condition is set to a BER value in a range between a BER value obtained in the case where a radio wave reception status is extremely poor and the BER value as the threshold value of the output switching condition. When a BER value is improved to become better than the threshold value of the software-based decoding starting condition, it is judged that the software-based decoding starting condition is met, and when the BER value further is improved to become better than the threshold value of the output switching condition, it is judged that the output switching condition is met.

As shown in FIG. 19, solid lines 17 and 18, each showing a BER value that represents a demodulation status of digital signal processing in the demodulation section 103 and thus is used as an index representing a reception status, both exhibit initial values representing a reception status worse than that represented by the threshold value for determining that the software-based decoding starting condition is met. In the case where the reception status ameliorates and the value representing the reception status reaches and becomes higher than the threshold value for determining that the software-based decoding starting condition is met, the software-based decoding portion 205b is activated, thereby bringing about a state where an output signal can be generated based on a 12-segment broadcast signal. In this case, as described above, if there is any deactivated portion among portions for performing processing of a 12-segment signal in the signal processing portions, such a portion also is activated at this time. Herein, it is only required to bring about a state where signal processing is performed based on a 12-segment broadcast signal in a weak hierarchical level, and an output signal is generated based on a 12-segment broadcast signal.

In the case where, after that, as shown by the solid line 18, the reception status deteriorates and the index representing the reception status again reaches and becomes lower than the threshold value for determining that the software-based decoding starting condition is met, at the time when this threshold value is reached, the software-based decoding portion 205b is deactivated. In the case where when the above-described index representing the reception status reaches the threshold value for determining that the software-based decoding starting condition is met, any other signal processing unit has also been activated at the same time as the software-based decoding portion 205b, such a signal processing unit that has been activated is deactivated. On the other hand, in the case where, as shown by the solid line 17, the reception status ameliorates directly from its previous status and the index representing the reception status reaches and even becomes higher than the threshold value for determining that the output switching condition is met, the switching section 107 as the output switching unit performs switching to an output signal based on a 12-segment broadcast signal, which is generated by the software-based decoding portion 205b. In this case, at a point in time when the index representing the reception status reaches the threshold value of the software-based decoding starting condition, the generation of an output signal based on a 12-segment broadcast signal has been started by the software-based decoding portion 205b, and thus from the instant when the switching control section 106 as the output control unit generates a switching signal for switching an output in the switching section 107, an output signal based on a 12-segment broadcast signal in a weak hierarchical level can be outputted without delay.

After that, in the state where the outputting of an output signal based on a 12-segment broadcast is continued, switching is performed from an output signal based on the software-based decoding portion 205b to an output signal based on the circuit-based decoding portion 205a.

If these threshold values are set to values that are too bad, in the case where the radio wave reception status changes abruptly, there is a possibility that switching cannot be performed in time, so that video or audio being outputted is disturbed. Further, the length of time in which the generation of an output signal is performed based on a signal in a weak hierarchical level having low resistance to noise might be increased, resulting in a reduced effect of suppressing power consumption. Conversely, if these threshold values are set to values that are too good, a shift to processing of generating an output signal based on a 12-segment broadcast signal might be delayed, which has low resistance to noise or the like but contains plenty of information as image information and enables a display of a basically high-resolution image. This results in a large loss of time as an occasion when a high-level image output can be achieved. Because of this, desirably, in setting these threshold values, a study for determining optimum values is conducted beforehand, and these values are set so as to be adjusted to optimum values through learning. Furthermore, the user may set these values manually, though this could be a somewhat complicated process.

The above description showed an example in which a BER value obtained from the demodulating section 103 was used as an index for judging a radio wave reception status. However, the above description also is applicable to the case of using, as the index, other indices obtained from the tuner section 102, the demodulating section 103, the TS processing section 104, and the decoding section 205. Further, this example is merely illustrative, and any index and judging method may be used as long as, when the radio wave reception status ameliorates, the software-based decoding starting condition is met before the output switching condition is met, and the output switching condition is met in a radio wave reception status such that after output switching is performed, video and audio are not disturbed. For example, a block noise occurrence rate, a total value of a motion vector amount, a manner in which an audio is interrupted, etc. can be used as the index.

Although this example was described on the precondition that the software-based decoding portion 205b was capable of decoding both of 12-segment broadcast digital data and 1-segment broadcast digital data, in light of the case where a low-performance CPU is used, the software-based decoding portion 205b may be configured so as to be capable of decoding only 1-segment broadcast digital data. Even in that case, video and audio can be switched from those of a 12-segment broadcast to those of a 1-segment broadcast without interruption.

### (Third Embodiment)

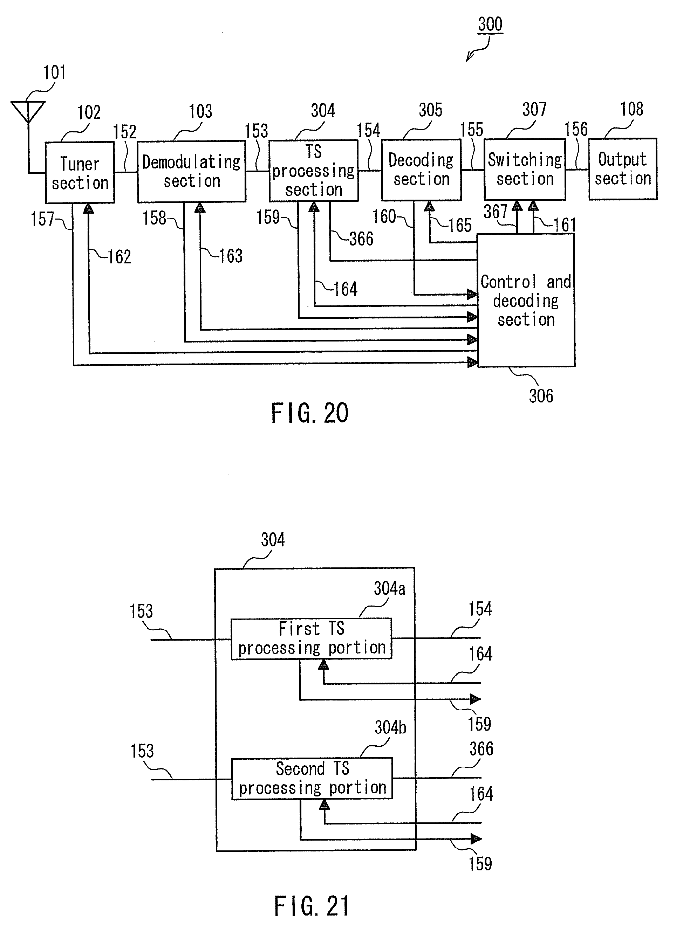

Next, as a third embodiment, another embodiment of the digital broadcast reception device according to the present invention will be described with reference to FIGs. 20 to 22.

FIG. 20 is a diagram showing a functional configuration of a digital broadcast reception device 300 that will be described as the third embodiment of the present invention.

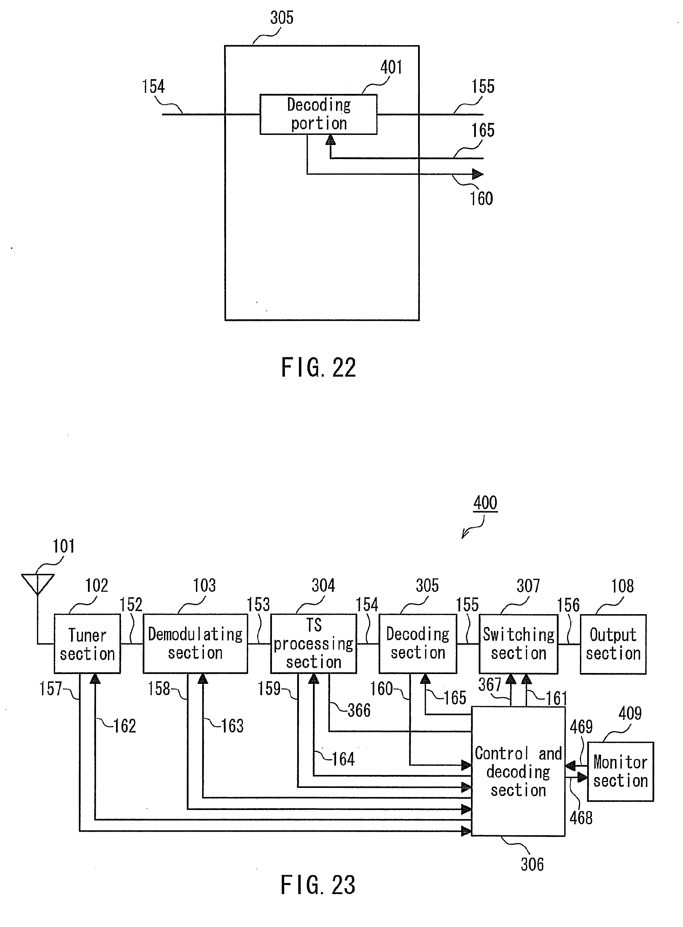

As shown in FIG. 20, the digital broadcast reception device 300 is different from the digital broadcast reception device 200 as the second embodiment shown in FIG. 12 in that a control and decoding section 306 as a switching control unit has a function of performing decoding processing by means of software, which was the function of the software-based decoding portion 205a in the decoding section 205 in the second embodiment. Accordingly, as shown in FIG. 22, a decoding section 305 of the digital broadcast reception device 300 according to this embodiment shown in FIG. 20 only has a decoding portion 401 that decodes a digital signal by means of a processing circuit.

Furthermore, as shown in FIG. 21, digital data (e.g. an elementary stream) as an output from a second TS processing portion 304b as a constituent component of a TS processing section 304 is inputted to the control and decoding section 306 via a connection line 366. Then, a video signal, an audio signal, or a signal of other types related to multimedia data that is an output signal obtained by decoding using the software-based decoding function of the control and decoding section 306 is led to a switching section via a connection line 367. Herein, it is not required that said signals be transmitted directly on the connection lines 366 and 367, and an exchange of information may be performed by making an access to a register or a memory.

As shown in FIG. 22, the decoding section 305 includes the decoding portion 401 that is a circuit-based decoding portion capable of decoding both of 12-segment broadcast digital data and 1-segment broadcast digital data by means of a processing circuit. Video, audio, or data of other types obtained by conversion in the decoding portion 401 is outputted to a switching section 307 via a connection line 155. Further, a signal related to an index representing a decoding status of video, audio, or data of other types in the decoding portion 401 is outputted to the control and decoding section 307 via a connection line 160.

The control and decoding section 306 has the function of a software-based decoding portion for enabling decoding processing of both of 12-segment broadcast digital data and 1-segment broadcast digital data through execution of software and a function of a switching control section for determining video and audio to be outputted based on predetermined information obtained from various sections. Herein, in each of the digital broadcast reception devices according to the first and second embodiments shown in FIGs. 1 and 12, respectively, to be specific, the switching control function performed by the switching control section 106 is a function of distinguishing a signal reception status in order to grasp and adjust an operation of each section constituting a circuit-based processing unit, and is performed by executing software using a computing function of a CPU or the like. Therefore, when the function of software-based decoding processing and the function of switching control processing, each of which is performed through execution of software using a computing function of a CPU or the like, are integrated in the control and decoding section 306 as in this embodiment, it is sufficient that a computing portion such as a CPU or the like is provided only in one place that is the control and decoding section 306. This allows the digital broadcast reception device to have a simplified configuration.

As described above, video, audio, or data of other types obtained by conversion using the software-based decoding function is outputted to the switching section 307 via the connection line 367.

In the switching section 307, in accordance with an instruction from the control and decoding section 306, switching between video, audio, or data of other types obtained by processing in the decoding section 305 and video, audio, or data of other types obtained by processing in the control and decoding section 306 is performed, and the video, audio, or data of other types designated as a result of the switching is outputted to an output section 108 via a connection line 156.

As for a procedure of switching a hierarchical level, timing showing a state of starting/halting software-based decoding and a selection status of a hierarchical level, a software-based decoding starting condition and an output switching condition, an index for judging a radio wave reception status, etc., these are the same as those in the case of the digital broadcast reception device 200 shown as the second embodiment, and thus detailed descriptions thereof are omitted.

With the control and decoding section 306 having the function of software-based decoding processing in addition to the function of controlled switching processing, there is no need to provide a CPU as a computing portion in the decoding section, and thus it is sufficient to include only one CPU for performing software control, thereby allowing the digital broadcast reception device to have a simplified circuit configuration.

The description is directed next to an application example of the digital broadcast reception device according to this embodiment. FIG. 23 is a diagram showing a functional configuration of a digital broadcast reception device 400 as the application example of the digital broadcast reception device according to this embodiment.

As shown in FIG. 23, in addition to the configuration of the digital broadcast reception device 300 according to this embodiment shown in FIG. 20, the digital broadcast reception device 400 as the application example has a monitor section 409 that monitors an operational state of a computing portion such as a CPU or the like that performs software-based processing in the control and decoding section 306. The monitor section 409 is connected to the control and decoding section 307 by connection lines 468 and 469.

Via the connection line 468, a signal related to an index representing a use status of the CPU in the control and decoding section 306 (e.g. a CPU time occupancy, a CUP resource usage, the number of backlogged tasks, etc.) is transmitted to the monitor section 409. Further, via the connection line 469, a signal for adjusting software-based decoding processing from the monitor section 409 is transmitted. Also in this case, it is not required that a signal be transmitted directly on a signal line as each of the connection lines 468 and 469, and an exchange of information may be performed by making an access to a register or a memory.

The monitor section 409 has a function of monitoring a status in which the CPU as the computing portion is used by software, such as of, for example, task management software for operating system software on a PC, and judges whether normal software-based decoding processing can be performed based on the use status of the CPU as the computing portion in the control and decoding section 306. Herein, normal software-based decoding processing refers to decoding processing such as the processing performed in the software-based decoding portion 205b of the decoding section 205 in the above-described second embodiment, which can achieve accuracy required from the viewpoint of decoding of a digital data signal and ensure sufficiency of contents required of a signal resulting from the decoding.

If it is judged that there is room to perform normal software-based decoding processing, in the control and decoding section 306, normal software-based decoding processing is performed using the CPU as the computing portion. On the other hand, if it is judged in the monitor section 409 that there is no room to perform normal software-based decoding processing due to the CPU as the computing portion being subjected to a large load, i.e. that smooth decoding might be hindered depending on an amount of information contained in an image signal to be processed, simplified software-based decoding processing is performed based on a signal from the monitor section 409. Herein, simplified software-based decoding processing refers to decoding processing in which, though an output signal of quality as high as that of an output signal obtained by the above-described normal software-based decoding processing cannot be obtained, a load on the CPU is reduced to such an extent as to allow an output of a level sufficient for practical use to be obtained.

As described above, the monitor section 409 grasps a load status of the computing portion such as a CPU or the like in the control and decoding section 306, and makes an adjustment so that the computing portion is prevented from being subjected to an excessive load, and thus a phenomenon can be prevented effectively in which an excessive load state is brought about during software-based decoding processing, leading to an adverse effect of causing an image signal obtained by decoding to be disordered abruptly.

Although the foregoing discussion explained the embodiments of the present invention by way of specific examples, it should be noted that the above-described embodiments are merely examples for realizing the present invention and various modifications of the present invention also can be made.

### Industrial Applicability

The present invention is applicable to a digital broadcast reception device for terrestrial digital broadcasting, satellite digital broadcasting, or the like. The present invention can provide a favorable effect particularly when applied to a digital broadcast reception device that is mounted on a receiver that receives radio waves in a variable status such as, for example, a portable device or a mobile unit.

## Claims

1. A digital broadcast reception circuit used in a digital broadcast reception device that receives digital broadcast signals transmitted as signals in plural hierarchical levels of different qualities derived from one content, and outputs, among a plurality of output signals generated by processing the signals in plural hierarchical levels in signal processing units, respectively, an output signal based on a signal in a selected hierarchical level, the digital broadcast reception circuit comprising:
a switching control unit that judges a reception status of each of the signals in plural hierarchical levels in order to select one of the hierarchical levels with respect to which the output signal is to be generated, generates a switching signal for outputting a signal in the selected one of the hierarchical levels, and partly or entirely deactivates part of the signal processing units that processes a signal in an unselected one of the hierarchical levels; and
an output switching unit that switches an output signal based on the switching signal.

2. The digital broadcast reception circuit according to claim 1,
wherein the switching control unit obtains an index for judging the reception status,
when the index meets a signal processing portion activation condition, the switching control unit activates part of the signal processing units that is used to generate the output signal based on a signal in the selected one of the hierarchical levels, and
when the index meets an output switching condition, the switching control unit generates the switching signal.

3. The digital broadcast reception circuit according to claim 2,
wherein the switching control unit intermittently activates one of the signal processing units that processes a signal in one of the hierarchical levels with respect to which the index is to be obtained.

4. The digital broadcast reception circuit according to claim 1,
wherein the plural hierarchical levels of different qualities are composed of a strong hierarchical level having high resistance to noise and multipath and a weak hierarchical level having low resistance to noise and mutipath.

5. The digital broadcast reception circuit according to claim 4,
wherein the strong hierarchical level and the weak hierarchical level are a hierarchical level for a 1-segment broadcast and a hierarchical level for a 12-segment broadcast according to terrestrial digital broadcasting, respectively.

6. The digital broadcast reception circuit according to claim 4,
wherein in a case where the output signal based on a signal in the weak hierarchical level is being outputted, when the index meets the signal processing portion activation condition, part of the signal processing units that is used to generate the output signal based on a signal in the strong hierarchical level is activated, and
when the index meets the output switching condition, the output signal based on a signal in the strong hierarchical level is outputted by the output switching unit.

7. The digital broadcast reception circuit according to claim 6,
wherein the index represents a reception status of a broadcast signal in the weak hierarchical level, a threshold value for determining that the index meets the output switching condition is set to an index value representing a reception status better than a reception status in which video and audio obtained from the output signal based on a signal in the weak hierarchical level are disturbed, and a threshold value for determining that the index meets the signal processing portion activation condition is set to an index value representing a reception status better than the reception status represented by the threshold value for determining that the output switching condition is met.

8. The digital broadcast reception circuit according to claim 4,
wherein in a case where the output signal based on a signal in the strong hierarchical level is being outputted, when the index meets the signal processing portion activation condition, part of the signal processing units that is used to generate the output signal based on a signal in the weak hierarchical level is activated, and
when the index meets the output switching condition, the output signal based on a signal in the weak hierarchical level is outputted by the output switching unit.

9. The digital broadcast reception circuit according to claim 8,
wherein the index represents a reception status of a broadcast signal in the weak hierarchical level obtained by intermittently activating one of the signal processing units that is used to generate the output signal based on a signal in the weak hierarchical level, a threshold value for determining that the index meets the output switching condition is set to an index value representing a reception status better than a reception status in which video and audio obtained from the output signal based on a signal in the weak hierarchical level are disturbed, and a threshold value for determining that the index meets the signal processing portion activation condition is set to an index value representing a reception status poorer than the reception status represented by the index value representing the reception status for determining that the output switching condition is met.

10. The digital broadcast reception circuit according to any one of claims 2 to 9,
wherein the threshold value for determining that the index meets the output switching condition and the threshold value for determining that the index meets the signal processing portion activation condition are set in advance.

11. The digital broadcast reception circuit according to any one of claims 2 to 9,
wherein the threshold value for determining that the index meets the output switching condition and the threshold value for determining that the index meets the signal processing portion activation condition can be set manually by a user.

12. The digital broadcast reception circuit according to any one of claims 2 to 9,
wherein the threshold value for determining that the index meets the output switching condition and the threshold value for determining that the index meets the signal processing portion activation condition are updated to more appropriate values so as to correspond to a result of determining a use status.

13. The digital broadcast reception circuit according to claim 1,
wherein the signal processing units comprises a decoding section that has a circuit-based decoding portion in which signals in the plural hierarchical levels are decoded using a processing circuit and a software-based decoding portion in which signals in the plural hierarchical levels are decoded through execution of software,
the switching control unit obtains an index for judging the reception status,
when the index meets a software-based decoding starting condition, the switching control unit starts decoding processing based on a signal in a selected one of the hierarchical levels in the software-based decoding portion, and
when the index meets an output switching condition, the switching control unit generates the switching signal so as to allow a signal obtained by processing in the software-based decoding section to be outputted from an output unit, and starts decoding processing based on a signal in the selected one of the hierarchical levels in the circuit-based decoding portion, after which the switching control unit generates the switching signal again so as to allow a signal obtained by processing in the circuit-based decoding portion to be outputted from the output unit.

14. The digital broadcast reception circuit according to claim 1,
wherein the signal processing units comprises a decoding section that has a circuit-based decoding portion in which signals in the plural hierarchical levels are decoded using a processing circuit,
the switching control unit comprises a software-based decoding portion in which signals in the plural hierarchical levels are decoded through execution of software,
the switching control unit obtains an index for judging the reception status,
when the index meets a software-based decoding starting condition, the switching control unit starts decoding processing based on a signal in a selected one of the hierarchical levels in the software-based decoding portion, and
when the index meets an output switching condition, the switching control unit allows a signal obtained by processing in the software-based decoding section to be outputted from an output unit, and starts decoding processing based on a signal in the selected one of the hierarchical levels in the circuit-based decoding portion, after which the switching control unit generates the switching signal so as to allow a signal obtained by processing in the circuit-based decoding portion to be outputted from the output unit.

15. The digital broadcast reception circuit according to claim 14,
wherein a monitor section is provided that obtains an index representing a load status of a computing portion of the switching control unit, which performs processing using software, judges, based on the index, whether normal decoding processing using the software can be performed in the switching control unit, and, when the normal decoding processing using the software hardly can be performed in the switching control unit, instructs the software-based decoding portion to perform simplified software-based decoding processing.

16. The digital broadcast reception circuit according to claim 13,
wherein after allowing the signal obtained by processing in the circuit-based decoding portion to be outputted from the output unit, the signal processing units deactivate the software-based decoding portion.

17. The digital broadcast reception circuit according to claim 13,
wherein the switching control unit intermittently activates one of the signal processing units that processes a signal in one of the hierarchical levels with respect to which the index is to be obtained.

18. The digital broadcast reception circuit according to claim 13,
wherein the plural hierarchical levels of different qualities are composed of a strong hierarchical level having high resistance to noise and multipath and a weak hierarchical level having low resistance to noise and mutipath.

19. The digital broadcast reception circuit according to claim 18,
wherein the strong hierarchical level and the weak hierarchical level are a hierarchical level for a 1-segment broadcast and a hierarchical level for a 12-segment broadcast according to terrestrial digital broadcasting, respectively.

20. The digital broadcast reception circuit according to claim 18,
wherein in a case where the output signal based on a signal in the weak hierarchical level is being outputted, the index represents a reception status of a broadcast signal in the weak hierarchical level, a threshold value for determining that the index meets the output switching condition is set to an index value representing a reception status better than a reception status in which video and audio obtained from the output signal based on a signal in the weak hierarchical level are disturbed, and a threshold value for determining that the index meets the software-based decoding starting condition is set to an index value representing a reception status better than the reception status represented by the threshold value for determining that the output switching condition is met.

21. The digital broadcast reception circuit according to claim 18,
wherein in a case where the output signal based on a signal in the strong hierarchical level is being outputted, the index represents a reception status of a broadcast signal in the weak hierarchical level obtained by intermittently activating one of the signal processing units that is used to generate the output signal based on a signal in the weak hierarchical level, a threshold value for determining that the index meets the output switching condition is set to an index value representing a reception status better than a reception status in which video and audio obtained from the output signal based on a signal in the weak hierarchical level are disturbed, and a threshold value for determining that the index meets the software-based decoding starting condition is set to an index value representing a reception status poorer than the reception status represented by the index value representing the reception status for determining that the output switching condition is met.

22. The digital broadcast reception circuit according to claim 20,
wherein the threshold value for determining that the index meets the output switching condition and the threshold value for determining that the index meets the software-based decoding starting condition are set in advance.

23. The digital broadcast reception circuit according to claim 20,
wherein the threshold value for determining that the index meets the output switching condition and the threshold value for determining that the index meets the software-based decoding starting condition can be set manually by a user.

24. The digital broadcast reception circuit according to claim 20,
wherein the threshold value for determining that the index meets the output switching condition and the threshold value for determining that the index meets the software-based decoding starting condition are updated to more appropriate values so as to correspond to a result of determining a use status.

25. The digital broadcast reception circuit according to claim 1,
wherein the reception status is judged based on a field strength.

26. The digital broadcast reception circuit according to claim 1,
wherein the reception status is judged based on a BER

27. The digital broadcast reception circuit according to claim 1,
wherein the reception status is judged based on a block noise occurrence rate.

28. The digital broadcast reception circuit according to claim 1,
wherein the reception status is judged based on a total value of a motion vector amount.

29. The digital broadcast reception circuit according to claim 1,
wherein the reception status is judged based on a manner in which audio is interrupted.

30. A digital broadcast reception device, comprising:
a digital broadcast reception circuit as claimed in any one of claims 1 to 29; and
signal processing units that process a digital broadcast signal,
wherein the signal processing units comprise a tuner section, a demodulating section, a TS processing section, and a decoding section, and
the tuner section, the demodulating section, the TS processing section, and the decoding section can process signals in two or more different hierarchical levels simultaneously, can activate and deactivate independently a function that processes a signal in each of the hierarchical levels, and further can output independently an index representing a reception status regarding one of the hierarchical levels with respect to which processing is being performed.

31. A method of controlling a digital broadcast reception device, comprising:
a first step of judging a reception status of each of digital broadcast signals transmitted as signals in plural hierarchical levels of different qualities derived from one content, selecting, based on the reception status, one of the hierarchical levels with respect to which an output signal is to be generated, and starting, when an index representing the reception status reaches a first threshold value, signal processing based on a signal in the selected one of the hierarchical levels; and
a second step of performing, when the index representing the reception status reaches a second threshold value, switching to a state for outputting an output signal obtained by processing based on a signal in the selected one of the hierarchical levels.
